# EUROPEAN PATENT APPLICATION

(11) **EP 4 716 304 A1**
(43) Date of publication of application: **25.03.2026**
(21) Application number: 23946087.6
(22) Date of filing: 21.07.2023
(51) Int. Cl.: H04W 40/22

(54) **RELAY COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: LENG, Bingxue, Dongguan, Guangdong 523860 (CN); LU, Qianxi, Dongguan, Guangdong 523860 (CN)
(74) Representative: Penza, Giancarlo
(86) International application number: PCT/CN2023/108680
(87) International publication number: WO 2025/019993

(57) **Abstract**

The present application relates to a relay communication method and a device. The method comprises: on the basis of a first trigger condition, a first terminal selects a relay terminal meeting a requirement of the first terminal, wherein the first terminal and the relay terminal are in a multi-hop relay link, and the first trigger condition is related to a link status. In embodiments of the present application, selection of a relay can be triggered on the basis of a trigger condition to form a multi-hop relay link, thereby improving the communication reliability and expanding the communication range.

## Description

### TECHNICAL FIELD

The disclosure relates to the technical field of communications, and more particularly to methods and devices for relay communication.

### BACKGROUND

With an advancement of wireless communication technology, the concept of relay was introduced in the 3rd generation partnership project (3GPP). A remote terminal may be connected to a network via a relay terminal, such as in user equipment (UE) to network (U2N) relays. A source terminal may also be connected to a target terminal via a relay terminal, such as in UE to UE (U2U) relays. Communication based on the relay terminal may extend a communication distance and enhance a communication reliability.

### SUMMARY

Embodiments of the disclosure provide methods and devices for relay communication that can enhance the communication reliability and coverage.

An embodiment of the disclosure provides a method for relay communication, and the method includes the following operation. A first terminal selects a relay terminal that meets requirements of the first terminal based on a first trigger condition. The first terminal and the relay terminal are located in a multi-hop relay link, and the first trigger condition is related to a link status.

An embodiment of the disclosure provides a method for relay communication, and the method includes the following operation. A second terminal transmits a link status. The link status is related to a first trigger condition, and the first trigger condition is used for triggering a first terminal to select a relay terminal that meets requirements of the first terminal. The first terminal, the second terminal, and the relay terminal are located in a multi-hop relay link.

An embodiment of the disclosure provides a first terminal including a processing unit. The processing unit is configured to select a relay terminal that meets requirements of the first terminal based on a first trigger condition. The first terminal and the relay terminal are located in a multi-hop relay link, and the first trigger condition is related to a link status.

An embodiment of the disclosure provides a second terminal including a transmission unit. The transmission unit is configured to transmit a link status. The link status is related to a first trigger condition, and the first trigger condition is used for triggering a first terminal to select a relay terminal that meets requirements of the first terminal. The first terminal, the second terminal, and the relay terminal are located in a multi-hop relay link.

An embodiment of the disclosure provides a terminal device including a processor and a memory. The memory is configured to store a computer program, and the processor is configured to invoke the computer program stored in the memory and execute the computer program to enable the terminal device to execute the methods for relay communication described above.

An embodiment of the disclosure provides a chip for implementing the methods for relay communication described above. Specifically, the chip includes: a processor configured to invoke a computer program from a memory and execute the computer program to enable a device equipped with the chip to execute the methods for relay communication described above.

An embodiment of the disclosure provides a computer-readable storage medium for storing a computer program that, when executed by a device, enables the device to execute the methods for relay communication described above.

An embodiment of the disclosure provides a computer program product including computer program instructions that enable a computer to execute the methods for relay communication described above.

An embodiment of the disclosure provides a computer program that, when executed on a computer, enables the computer to execute the methods for relay communication described above.

In the embodiments of the disclosure, the multi-hop relay link can be formed by triggering a relay selection based on a trigger condition, thereby enhancing the communication reliability and coverage.

### BRIEF DESCRIPTION OF THE DRAWINGS

FIG. 1 is a schematic diagram of an application scenario according to an embodiment of the disclosure.
FIG. 2A is a schematic diagram of a transmission mode 3 in 3GPP.
FIG. 2B is a schematic diagram of a transmission mode 4 in 3GPP.
FIG. 3 is a schematic diagram of a UE-to-UE relay.
FIG. 4 is a schematic flowchart illustrating a connection establishment process for a UE-to-UE relay.
FIG. 5 is a schematic diagram of a UE architecture in a UE-to-UE relay.
FIG. 6 is a schematic flowchart of a method for relay communication according to an embodiment of the disclosure.
FIG. 7 is a schematic flowchart of a method for relay communication according to another embodiment of the disclosure.
FIG. 8 is a schematic flowchart of a method for relay communication according to yet another embodiment of the disclosure.
FIG. 9 is a schematic flowchart of a method for relay communication according to an embodiment of the disclosure.
FIG. 10 is a schematic flowchart of a centralized relay selection/reselection according to a second embodiment of the disclosure.
FIG. 11 is a schematic flowchart of a distributed relay selection/reselection according to a third embodiment of the disclosure.
FIG. 12 is a schematic block diagram of a first terminal according to an embodiment of the disclosure.
FIG. 13 is a schematic block diagram of a first terminal according to another embodiment of the disclosure.
FIG. 14 is a schematic block diagram of a second terminal according to an embodiment of the disclosure.
FIG. 15 is a schematic structural diagram of a communication device according to an embodiment of the disclosure.
FIG. 16 is a schematic block diagram of a chip according to an embodiment of the disclosure.
FIG. 17 is a schematic block diagram of a communication system according to an embodiment of the disclosure.

### DETAILED DESCRIPTION

The technical solutions in the embodiments of the disclosure will be described in conjunction with the accompanying drawings in the embodiments of the disclosure.

The technical solutions in the embodiments of the disclosure may be applied to various communication systems, such as: a global system of mobile communication (GSM), a code division multiple access (CDMA) system, a wideband CDMA (WCDMA) system, a general packet radio service (GPRS) system, a long term evolution (LTE) system, an advanced LTE (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) system or other communication systems.

Generally, the number of connections supported by a traditional communication system is limited and the connections are easy to be implemented. However, with the development of the communication technology, a mobile communication system will not only support traditional communications, but also support, for example, a device to device (D2D) communication, a machine to machine (M2M) communication, a machine type communication (MTC), a vehicle to vehicle (V2V) communication, or a vehicle to everything (V2X) communication, etc. The embodiments of the disclosure may also be applied to these communication systems.

In an implementation, the communication system in the embodiments of the disclosure may be applied to a carrier aggregation (CA) scenario and a dual connectivity (DC) scenario, and may also be applied to a standalone (SA) network deployment scenario.

In an implementation, the communication system in the embodiments of the disclosure may be applied to an unlicensed spectrum. The unlicensed spectrum may also be considered to be a shared spectrum. Alternatively, the communication system in the embodiments of the disclosure may also be applied to a licensed spectrum. The licensed spectrum may also be considered to be an unshared spectrum.

Various embodiments are described in combination with a network device and a terminal device in the embodiments of the disclosure. The terminal device may also be called a UE, an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a station (ST) in the WLAN, and may also be a cellular phone, a cordless phone, a session initiation protocol (SIP) phone, a wireless local loop (WLL) station, a personal digital assistant (PDA) device, a handheld device with a wireless communication function, a computing device, another processing device connected to a wireless modem, a vehicle-mounted device, a wearable device, a terminal device in a next generation communication system such as the NR network, or a terminal device in a future evolved public land mobile network (PLMN) or the like.

In the embodiments of the disclosure, the terminal device may be deployed on land, including indoors or outdoors, as hand-held, wearable or vehicle-mounted devices; or may be deployed on water surfaces (such as on ships); or may be deployed in the air (such as on airplanes, balloons and satellites).

In the embodiments of the disclosure, the terminal device may be a mobile phone, a tablet computer (pad), a computer with a wireless transceiver function, a virtual reality (VR) terminal device, an augmented reality (AR) terminal device, a wireless terminal device in an industrial control, a wireless terminal device in a self-driving, a wireless terminal device in a remote medical, a wireless terminal device in a smart grid, a wireless terminal device in a transportation safety, a wireless terminal device in a smart city, or a wireless terminal device in a smart home, etc.

By way of example but not limitation, in the embodiments of the disclosure, the terminal device may be a wearable device. The wearable device may also be referred to as a wearable smart device, which is a general name of wearable devices developed by applying wearable technology and intelligently designing daily wearable items, such as glasses, gloves, watches, clothing and shoes. The wearable device is a portable device that is worn directly on the body or integrated into the clothes or accessories of a user. The wearable device is not only a hardware device, but also can realize powerful functions through software support, data interaction and cloud interaction. Broadly defined, the wearable smart devices include those with comprehensive functions, large sizes and an ability to perform whole or partial functions independently of a smart phone, such as a smart watch or smart glasses, as well as those focused on specific application functions that require integration with another device like the smart phone, such as various smart bracelets and smart jewelry for monitoring vital signs.

In the embodiments of the disclosure, the network device may be a device for communicating with the mobile device. The network device may be an access point (AP) in the WLAN, a base transceiver station (BTS) in the GSM or CDMA, a base station (NodeB, NB) in the WCDMA, an evolutional node B (eNB or eNodeB) in the LTE, a relay station or an AP, a vehicle-mounted device, a wearable device, a network device (gNB) in the NR network, a network device in the future evolved PLMN or a network device in the NTN, etc.

By way of example and not limitation, in the embodiments of the disclosure, the network device may have a mobility characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, and the like. Optionally, the network device may also be a base station arranged on land, water and the like.

In the embodiments of the disclosure, the network device may provide services for a cell, and the terminal device communicates with the network device through transmission resources (e.g. frequency-domain resources or called spectrum resources) utilized by the cell. The cell may be a cell corresponding to the network device such as a base station. The cell may belong to a macro base station or to a base station corresponding to a small cell. Herein, the small cell may include: a metro cell, a micro cell, a pico cell, a femto cell, etc. These small cells have the characteristics of small coverage and low transmission power, and are suitable for providing high-speed data transmission services.

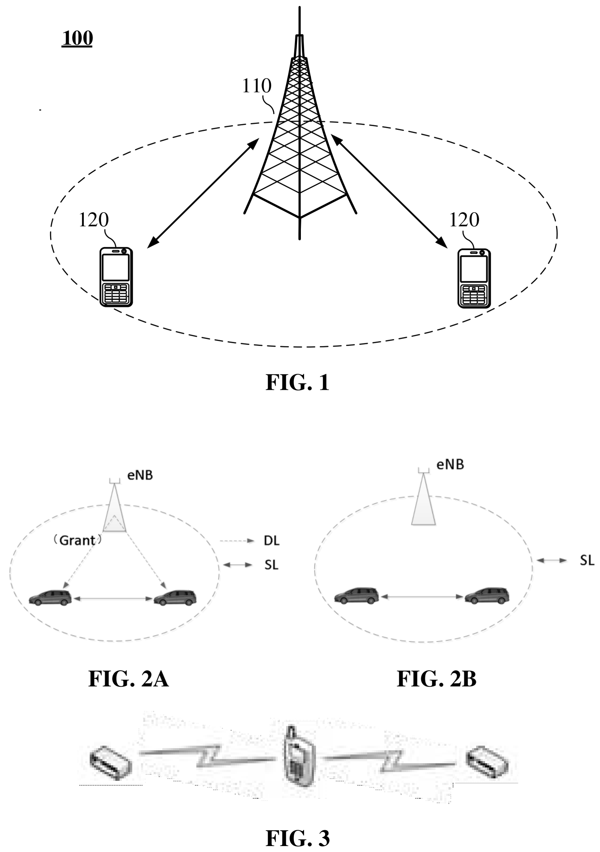

FIG. 1 illustrates a communication system 100 by way of example. The communication system includes a network device 110 and two terminal devices 120. In a possible implementation, the communication system 100 may include a plurality of network devices 110 and each network device 110 may cover a different number of terminal devices 120, which is not limited in the embodiments of the disclosure.

In an implementation, the communication system 100 may further include other network entities, such as, a mobility management entity (MME), an access and mobility management function (AMF), and the like, which is not limited in the embodiments of the disclosure.

The network device may further include an access network device and a core network device. That is, the wireless communication system also includes multiple core networks for communicating with the access network device. The access network device may be an evolutional node B (for short an eNB or e-NodeB), a macro base station, a micro base station (also known as a "small base station"), a femto base station, an access point (AP), a transmission point (TP), or a new generation Node B (gNodeB) in the LTE system, the next generation (mobile communication system, NR system), or an authorized auxiliary access LTE (LAA-LTE) system, etc.

It should be understood that in the embodiments of the disclosure, a device within a network/system that possesses communication capabilities may be referred to as a communication device. The communication system illustrated in FIG. 1 is used as an example. The communication device may include the network device and terminal devices with communication capabilities. The network device and terminal device may correspond to specific devices described in the embodiments of the disclosure, which are not repeated here. The communication device may further include other devices within the communication system, such as a network controller, an MME, and other network entities, which are not limited in the embodiments of the disclosure.

It should be understood that, terms "system" and "network" are usually used interchangeably in the disclosure. The term "and/or" herein is only used to describe an association relationship between associated objects, and represents that three relationships may exist. For example, A and/or B may represent three conditions: independent existence of A, existence of both A and B and independent existence of B. In addition, the character "/" in the disclosure usually represents that previous and next associated objects form an "or" relationship.

It should also be understood that the word "indication" mentioned in the embodiments of the disclosure may refer to a direct indication or an indirect indication, and may also be indicative of an association. For example, A indicates B, which may represent that A directly indicates B, for example, B may be obtained through A; or that A indirectly indicates B, for example, A indicates C, and B may be obtained through C; or that there is an association between A and B.

The term "correspondence" described in the embodiments of the disclosure may represent that the listed items have a direct or indirect correspondence relationship, or an association relationship, or a relationship of indicating and being indicated, configuring and being configured, etc.

For ease of understanding the technical solutions in the embodiments of the disclosure, related technologies in the embodiments of the disclosure are described below. The following related technologies, used as optional solutions, may be combined with the technical solutions in the embodiments of the disclosure in various ways. Such combinations shall fall within the scope of protection of the embodiments of the disclosure.

### I. LTE D2D/V2X

A D2D communication is a sidelink (SL) transmission technology based on D2D. Unlike a traditional cellular system where communication data is received or transmitted via the base station, the V2X system employ a direct terminal-to-terminal communication. This approach offers higher spectral efficiency and lower transmission latency.

3GPP defines two transmission modes, i.e., Mode 3 and Mode 4.

In Mode 3, as shown in FIG. 2A, a transmission resource for the terminal is allocated by the base station. The terminal transmits data over the sidelink using the resource allocated by the base station. The base station may allocate the resource to the terminal for a single transmission or for a semi-static transmission.

In Mode 4, as shown in FIG. 2B, the vehicle-mounted terminal selects a resource from a resource pool for data transmission.

In 3GPP, D2D encompasses different phases.
(1) Proximity-based service (ProSe): the D2D communication in Rel-12/13 was researched for a ProSe scenario, which primarily targets a public safety service.
   In ProSe, the UE achieves discontinuous transmission/reception of data in the sidelink by configuring a position of the resource pool in a time domain (e.g., non-contiguous resource pool allocation in the time domain), thereby achieving a power-saving effect.
(2) Vehicle to everything (V2X): in Rel-14/15, the V2X system was studied for a vehicle-to-vehicle communication scenario, which primarily targets relatively high-speed vehicle-to-vehicle and vehicle-to-person communication services.
   In V2X, continuous power supply to the vehicle-mounted system makes power efficiency less critical, while data transmission latency becomes the primary concern. Consequently, a system design requires the terminal to perform continuous transmission and reception.
(3) Wearable device and further enhancement to D2D (FeD2D): in Release 14, this project investigated scenarios where the wearable device accesses the network via a smartphone, which primarily targets low-mobility and low-power access scenarios.

During a FeD2D pre-research phase, 3GPP concluded that the base station could configure discontinuous reception (DRX) parameters for a remote terminal via a relay terminal. However, as this project did not advance to the standardization phase, specific details for DRX configuration remain undetermined.

### II. NR V2X

Building upon the LTE V2X, the NR V2X extends beyond broadcast scenarios to further encompass unicast and multicast scenarios, and the application of V2X is studied in these scenarios.

Similar to the LTE V2X, the NR V2X also includes two resource authorization modes, i.e., Mode-1 and Mode-2. Furthermore, a user may be in a hybrid mode, simultaneously utilizing both Mode-1 and Mode-2 for resource acquisition. This resource acquisition is indicated via a sidelink grant, where the sidelink grant indicates time-frequency locations of resources for the physical sidelink control channel (PSCCH) and a corresponding physical sidelink shared channel (PSSCH).

Unlike the LTE V2X, the NR V2X introduces a feedback-based hybrid automatic repeat-request (HARQ) retransmission beyond a non-feedback, UE-initiated HARQ retransmission. This applies not only to a unicast communication but also to a multicast communication.

### III. Sidelink UE-to-UE relay technology

As shown in FIG. 3, in Rel-17 ProSe, 3GPP includes UE-to-UE (U2U) relay functionality based on a layer 2 or layer 3 relaying. Specifically, a source UE connects to a target UE via a relay UE, and the relay UE transmits data between the source UE and the target UE.

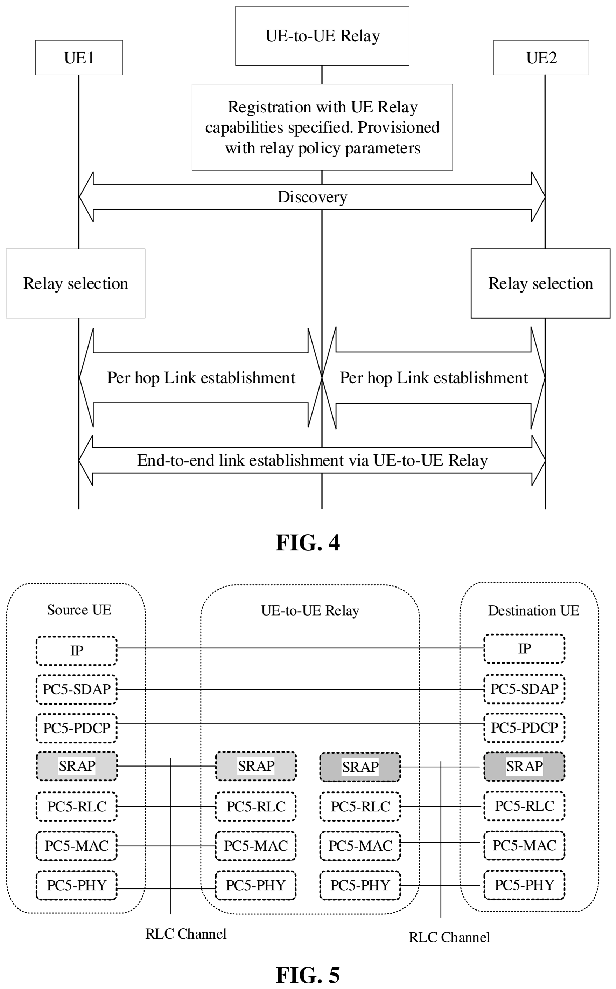

Specific connection establishment steps are illustrated in FIG. 4. The source UE, the relay UE, and the target UE discover each other through a discovery message or a direct communication request (DCR) message. The relay UE may assist the source UE in forwarding the discovery message or the DCR message. After the source UE and the target UE discover each other, they proceed with relay selection, select a suitable relay, establish connections with the relay respectively, and then use the relay to establish an end-to-end direct communication interface (PC5) connection.

3GPP Rel-17 includes a layer 2 terminal-to-terminal relaying. As shown in FIG. 5, an adaptation layer (e.g., a sidelink relay adaptation protocol (SRAP) layer) is positioned above radio link control (RLC) sublayers in the control plane and user plane between the relay UE and the source/target UEs. A PC5 service data adaptation protocol (SDAP)/packet data convergence protocol (PDCP) and a radio resource control (RRC) terminate between the source UE and the target UE. The RLC, a medium access control (MAC), and a physical layer (PHY) terminate at each link (i.e., a link between the source UE and the relay UE, and a link between the relay UE and the target UE). Whether the adaptation layer is also supported at the PC5 interface between the source UE and the relay UE remains undecided.

An example of an L2 UE-to-UE relay is as follows.
(1) The adaptation layer at the relay UE supports a sidelink bearer mapping between PC5 RLC channels. For a relay service in the sidelink, different end-to-end bearers (such as a signaling radio bearer (SRB) and a data radio bearer (DRB)) for the same remote UE and/or different remote UEs may undergo N:1 mapping and data multiplexing on a single PC5 RLC channel.
(2) The adaptation layer supports a terminal identification for the sidelink service (multiplexing data from multiple terminals). A PC5 radio bearer and identification information of the terminal are included within the adaptation layer to enable the target UE to associate received data packets with specific PDCP entities associated with the radio bearer of the source UE.

### IV. UE to network relay

The remote terminal performs measurement reporting, including information such as measurement results of a relay terminal identifier, a serving cell identifier, and a reference signal received power (RSRP) within measurement reporting information. When the remote terminal performs a link handover from a non-direct path to a direct path, a serving relay terminal may utilize an SL-RSRP for measurements on the sidelink. When the remote terminal performs a link handover from the direct path to the non-direct path, a sidelink discovery (SD)-RSRP may be used for measurements on the sidelink. Additionally, two new measurement reporting trigger events are defined for a relay handover from the terminal to the network during the measurement reporting. Event 1: the remote terminal performs measurement reporting when a link quality of the service relay terminal falls below a configured threshold, and optionally, when a link quality of an adjacent cell exceeds the configured threshold. Event 2: the remote terminal performs measurement reporting when a link quality of a serving cell falls below the configured threshold, and optionally, when a link quality of the relay terminal exceeds the configured threshold. Additionally, a new timer is introduced to assist the remote terminal in executing a handover from a direct link to a non-direct link. Upon receiving an RRC reconfiguration message indicating the handover from the direct link to the non-direct link, the remote terminal starts the timer. When the timer expires, the remote terminal performs RRC reestablishment.

The relevant U2U/U2N relaying is primarily in a single-hop scenario, for example, from the source UE to the target UE or gNB through the relay UE. The embodiments of the disclosure can further enhance coverage through a multi-hop relaying, for example, from the source UE to the target UE or gNB through multiple relay UEs, such as relay UEs 1, 2, ..., and the like. In a multi-hop relaying scenario, a multi-hop relay selection process in the sidelink may be affected. The methods for relay communication provided in the embodiments of the disclosure may include a multi-hop relay selection process in the multi-hop relay scenario.

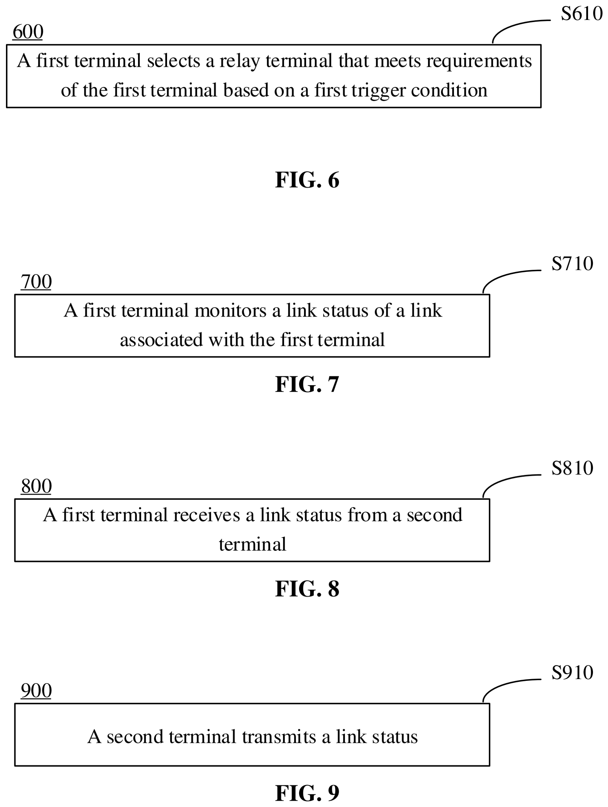

FIG. 6 is a schematic flowchart of a method 600 for relay communication according to an embodiment of the disclosure. The method 600 may optionally be applied to the systems shown in FIG. 1 to FIG. 5, but is not limited thereto. The method includes at least some of the following content.

At S610, a first terminal selects a relay terminal that meets requirements of the first terminal based on a first trigger condition. The first terminal and the relay terminal are located in a multi-hop relay link, and the first trigger condition is related to a link status.

In the embodiment of the disclosure, in a wireless communication scenario, the multi-hop relay link may include two or more relay terminals. In the embodiment of the disclosure, a role of a relay in the multi-hop relay link may be performed by a terminal. The wireless communication scenario in the embodiment of the disclosure may include scenarios supporting sidelink communication. The first terminal may be a terminal in the multi-hop relay link. The multi-hop relay link may be a U2U relay link or a U2N relay link. In the U2U relay link, the first terminal may be either a source terminal or a target terminal. In the U2N relay link, the first terminal may be a remote terminal. The first terminal may also be a relay terminal in the U2U or U2N relay link. The first trigger condition may include one or more conditions for triggering the first terminal to perform relay selection or reselection. The first trigger condition may be determined based on the link status associated with the first terminal.

In the embodiments of the disclosure, the first trigger condition may include a relay selection trigger condition and/or a relay reselection trigger condition. For example, the relay selection trigger condition may be used in scenarios where the first terminal currently lacks a serving relay link and is initially selecting a relay. The relay reselection trigger condition may be used in scenarios where the first terminal has already selected a relay (i.e., currently has a serving relay link) but may reselect a relay.

In an implementation, the first terminal is a remote terminal, a source terminal, a target terminal, or a relay terminal in the multi-hop relay link. Herein, the remote terminal, the source terminal, and the target terminal may also be referred to as end terminals.

In an implementation, the first trigger condition includes at least one of the following relay selection trigger conditions: an upper layer triggering at the first terminal; a link quality of a direct link of the first terminal falling below a configured threshold; a radio link failure occurring in a direct link of the first terminal; a link quality between the first terminal and one or more candidate relay terminals exceeding a configured threshold; or a difference between a link quality between the first terminal and one or more candidate relay terminals and a link quality of a direct link of the first terminal exceeding a configured threshold.

In the embodiments of the disclosure, the upper layer of the first terminal may include a V2X layer and/or a ProSe layer and the like. The V2X layer and/or the ProSe layer of the first terminal may trigger the initial selection of the first terminal for a relay in certain situations.

In the embodiments of the disclosure, the direct link of the first terminal may include a direct link between the first terminal and another terminal, or a direct link between the first terminal and a network device. Parameters characterizing the link quality may include various types, such as an SL-RSRP, an SD-RSRP, a Uu-RSRP, etc. Each parameter may have a respective configured threshold. The configured threshold may be preconfigured or dynamically configured by the network device. For example, if the SL-RSRP is less than or equal to an RSRP threshold, it may be determined that the relay selection trigger condition is satisfied.

In the embodiments of the disclosure, the radio link failure in the direct link of the first terminal may include a radio link failure between the first terminal and a directly connected terminal. The directly connected terminal to the first terminal may include a source terminal, a target terminal, or a remote terminal directly connected to the first terminal in the multi-hop relay link. For example, the first terminal may be the source terminal, and the directly connected terminal may be the target terminal. If a link between the source terminal and the target terminal fails, the source terminal may trigger a relay selection. For another example, the first terminal may be the target terminal, and the directly connected terminal may be the source terminal. If the link between the source terminal and the target terminal fails, the target terminal may trigger the relay selection. For another example, the first terminal may be the remote terminal, and the direct link of the first terminal includes the link between the remote terminal and a network device. If the link between the remote terminal and the network device fails, the remote terminal may trigger the relay selection. For another example, the source terminal, the target terminal, or the remote terminal may select one or more relay terminals. If the source terminal, the target terminal, or the remote terminal first selects a single relay terminal, that relay terminal may assume the role of the first terminal and continue selecting other relay terminals until the multi-hop relay link is formed. If the source terminal, the target terminal, or the remote terminal selects multiple relay terminals, the multi-hop relay link may be formed based on the selected multiple relay terminals.

In the embodiments of the disclosure, the radio link failure in the direct link of the first terminal may include a radio link failure between the first terminal and a network device. If a radio link failure occurs between the first terminal and a directly connected network device, the first terminal may trigger the selection of a relay terminal. The first terminal may be a remote terminal or a relay terminal already selected by another terminal. For example, a remote UE first selects UE1 as the relay UE between the remote UE and the network device, and the UE1 then selects UE2 as the relay UE between the UE1 and the network device. For another example, the remote UE first selects the UE1, the UE2, and UE3 as relay UEs between the remote UE and the network device.

In the embodiments of the disclosure, the configured threshold (e.g., referred to as a first configured threshold) for the link quality between the first terminal and one or more candidate relay terminals may be the same as or different from the configured threshold (e.g., referred to as a second configured threshold) for the link quality of the direct link of the first terminal. For example, the first configured threshold for an SL-RSRP of the direct link of the first terminal is Thr1, and the first configured threshold for an SD-RSRP is Thr2. The second configured threshold for an SL-RSRP of the link between the first terminal and the candidate relay terminal is Thr3, and the second configured threshold for an SD-RSRP is Thr4. Herein, Thr1 is the same as Thr3, while Thr2 is different from Thr4.

In the embodiments of the disclosure, the configured threshold (hereinafter referred to as a third configured threshold) for the difference between the link quality between the first terminal and one or more candidate relay terminals and the link quality of the direct link of the first terminal may be the same as or different from the first configured threshold and/or the second configured threshold. For example, the third configured threshold for the SL-RSRP difference is Thr5, and the second configured threshold for the SD-RSRP is Thr6. Herein, Thr5 is the same as Thr3, while Thr6 is different from Thr4.

In the embodiments of the disclosure, there may be one or more candidate relay terminals. Relay selection for any terminal may be triggered based on all candidate relay terminals. Alternatively, relay selection for a corresponding terminal may be triggered based on a subset of the candidate relay terminals.

For example, there are three candidate relay terminals, i.e., UE1, UE2, and UE3. The first terminal is the source UE. If the SL-RSRP between the source UE and at least one of the UE1, the UE2, or the UE3 exceeds the configured threshold, the source UE triggers the relay selection, e.g., selecting the UE1 as the relay UE between the source UE and the UE1. In this case, the UE1 may become the first terminal, and the UE1 then determines whether the SL-RSRP between the UE1 and the UE2 and/or the UE3 exceeds the configured threshold. If so, the UE1 triggers the selection of the UE2 or the UE3 as the relay UE between the UE1 and the target UE.

For another example, there are four candidate relay terminals, in which UE1 and UE2 are candidate relay terminals corresponding to the first terminal, while UE3 and UE4 are candidate relay terminals corresponding to a first-hop relay UE selected by the first terminal. If the first terminal is the target UE, and the SL-RSRP between the target UE and the UE1 and/or the UE2 exceeds the configured threshold, the target UE triggers the selection of the UE1 or the UE2 as the relay UE between the source UE and the UE1. If the UE1 is selected as the relay UE between the source UE and the UE1, the UE1 may then become the first terminal and continue to determine whether the SL-RSRP between the UE1 and the UE3 and/or the UE4 exceeds the configured threshold. If so, the UE1 triggers the selection of the UE3 or the UE4 as the relay UE between the UE1 and the target UE.

In the embodiments of the disclosure, after one or more first terminals initially select a relay terminal based on a trigger condition, the multi-hop relay link may be formed. This achieves a longer communication distance than a single-hop relay network, thereby enhancing communication reliability and coverage.

In an implementation, the link quality of the direct link of the first terminal falling below the configured threshold includes at least one of: a PC5 link quality between the first terminal and a directly connected terminal falling below a configured threshold; or a Uu link quality between the first terminal and a directly connected network device falling below a configured threshold.

For example, the first terminal may be a source UE, and its directly connected terminal may be the UE1. If the PC5 link quality between the source UE and the UE1 falls below the configured threshold, the source UE1 may trigger a relay selection. For another example, the first terminal may be a target UE, and its directly connected terminal may be the UE2. If the PC5 link quality between the target UE and the UE2 falls below the configured threshold, the target UE may trigger a relay selection. For another example, the first terminal may be the UE1, and its directly connected terminals are the source UE and the UE2. If the PC5 link quality between the source UE and the UE1 falls below the configured threshold, the UE1 may trigger a relay selection. If the PC5 link quality between the UE1 and the UE2 falls below the configured threshold, the UE1 may also trigger a relay selection.

In an implementation, the configured threshold(s) for the PC5 link and/or the Uu link is(are) configured via an RRC configuration, a system information block (SIB) configuration, or a pre-configuration.

In an implementation, the first trigger condition includes at least one of the following relay reselection trigger conditions: an upper layer triggering at the first terminal; a link quality of one or more hops in the multi-hop relay link where the first terminal is located falling below a configured threshold; a radio link failure occurring at one or more hops in the multi-hop relay link where the first terminal is located; a link(s) at one or more hops in the multi-hop relay link where the first terminal is located being released; a cell reselection, a handover (HO), or an RRC connection establishment failure occurring in a relay terminal(s) at one or more hops in the multi-hop relay link where the first terminal is located; or indication information from a relay terminal(s) at one or more hops in the multi-hop relay link where the first terminal is located.

In the embodiments of the disclosure, if a multi-hop relay link has already been established, the configured threshold for the link quality of one or more hops in this multi-hop relay link may be the same as or different from the configured threshold for the link quality used in the initial selection of the relay. The first terminal may determine whether to trigger a relay reselection based on one or more of: the link quality of one or more hops in the multi-hop relay link, whether the link has failed, whether the link has been released, whether a mobility change (a cell reselection, a HO, or an RRC connection establishment) has occurred, or an indication from the relay terminal, etc. The first terminal may be the source terminal, the target terminal, the remote terminal, or the relay terminal.

For example, in a multi-hop relay link, a link between the source UE and a relay UE1 constitutes the first hop (hop1), a link between the relay UE1 and a relay UE2 constitutes the second hop (hop2), and a link between the relay UE2 and the target UE constitutes the third hop (hop3).

If the first terminal is the source UE and a link quality of the hop1 falls below the configured threshold or the link is released, the source UE may trigger a relay reselection, and potentially select UE3 as the new relay UE between the source UE and the UE2. In this case, a link between the source UE and the UE3 becomes the hop1.

If the first terminal is the relay UE1, and a link quality of the hop2 falls below the configured threshold or the link is released, the relay UE1 may trigger a relay reselection, and potentially select UE4 as the new relay UE between the UE1 and the target UE. In this case, a link between the UE1 and the UE4 becomes the hop2, and a link between the UE4 and the target UE becomes the hop3.

If the first terminal is the relay UE1, and the UE2 associated with the hop2 and the hop3 experiences one or more events such as the cell reselection, the HO, or the RRC connection establishment failure, the UE1 may trigger a relay reselection. For example, the UE1 may select a relay UE5 as the new relay UE between the UE1 and the target UE. In this case, a link between the UE1 and the UE5 becomes the hop2, and a link between the UE5 and the target UE becomes the hop3.

For example, in a multi-hop relay link, a link between the network device and the relay UE1 is the hop1, a link between the relay UE1 and the relay UE2 is the hop2, and a link between the relay UE2 and the remote UE is the hop3.

If the first terminal is the relay UE1 and the link quality of the hop 1 falls below the configured threshold or the link is released, the relay UE1 may trigger a relay reselection, and potentially select UE6 as the relay UE between the network device and the UE1. In this case, a link between the network device and the relay UE6 becomes the hop1, and a link between the relay UE6 and the relay UE1 becomes the hop2.

If the first terminal is the relay UE2, and the link quality of the hop1 and the hop2 falls below the configured threshold or the links are released, the relay UE2 may trigger a relay reselection, and potentially select UE7 as the relay UE between the network device and the UE2. In this case, a link between the network device and the relay UE7 becomes the hop1, and a link between the relay UE7 and the relay UE2 becomes the hop2.

If the first terminal is a remote UE, and the UE2 associated with the hop3 experiences one or more events such as the cell reselection, the HO, or the RRC connection establishment failure, the remote UE may trigger a relay reselection. For example, the remote UE may select a relay UE8 as the relay UE between the remote UE and the UE1. In this case, a link between the UE1 and the relay UE8 become the hop2, and a link between the relay UE8 and the remote UE become the hop3.

In an implementation, the indication information from the relay terminal(s) at one or more hops in the multi-hop relay link where the first terminal is located may indicate at least one of: a link failure, a link release, or a link quality below the configured threshold occurring at the hop where the relay terminal is located, or a cell reselection, an HO, or an RRC connection establishment failure occurring at the relay terminal. If the first terminal receives this indication information, it may determine whether to perform relay reselection based on a specific content indicated by the indication information. For example, if the indication information indicates that the hop where the relay terminal is located has experienced the link failure, the link release, or the link quality below the configured threshold, the first terminal may perform the relay reselection. If the indication information indicates that the relay terminal has experienced the cell reselection, the HO, or the RRC connection establishment failure, the first terminal may perform the relay reselection.

In an implementation, the link quality of one or more hops in the multi-hop relay link where the first terminal is located falling below the configured threshold includes at least one of: a PC5 link quality of one or more hops in a link between the first terminal and a second terminal falling below a configured threshold; a PC5 link quality of one or more hops in a link between the first terminal and a network device falling below a configured threshold; or a Uu link quality between a relay terminal, at a first or last hop in the link between the first terminal and a network device, and a network falling below a configured threshold.

For example, if the first terminal is a source terminal, the second terminal may be a target terminal or a relay terminal. If the first terminal is a target terminal, the second terminal may be a source terminal or a relay terminal. If the first terminal is a remote terminal, the second terminal may be a relay terminal. If the first terminal is a relay terminal, the second terminal may be a source terminal, a target terminal, a remote terminal, or a relay terminal other than the first terminal.

For example, the first or last hop in the link between the first terminal and the network device may be understood as a hop between the relay terminal and the network device, for example, the hop1 between the UE1 and the network device in the above example.

In an implementation, the configured threshold(s) for the PC5 link and/or the Uu link is(are) configured by at least one of: an RRC configuration, an SIB configuration, a pre-configuration, a configuration from a relay, a configuration from a network to which the relay belongs, a configuration from a source terminal, or a configuration from a network to which the source terminal belongs. In the embodiments of the disclosure, the networks to which the terminals belong may be the same or different. The network to which a terminal belongs may transmit a configuration regarding that terminal to the terminal, or it may transmit, to that terminal, a configuration regarding other terminals in the multi-hop relay link where the terminal is located. For example, the relay UE1 belongs to a network 1, and the relay UE2 belongs to a network 2. The configured threshold(s) for the PC5 link and/or the Uu link of the relay UE1 may be received from the network 1, and the configured threshold(s) for the PC5 link and/or the Uu link of the relay UE2 may be received from the network 2. For another example, a source UE belongs to a network 3, and the configured threshold(s) for the PC5 link(s) of one or more of the source UE, the relay UE, and the target UE may be received from the network 3.

In an implementation, the thresholds for different hops in the multi-hop relay link where the first terminal is located may be configured to be the same or different. For example, the multi-hop relay link where the first terminal is located includes multi-hop links hop1, hop2, and hop3. The configured threshold for the SL-RSRP corresponding to the hop1 is Thr1, the configured threshold for the SL-RSRP corresponding to the hop2 is Thr2, and the configured threshold for the SL-RSRP corresponding to the hop3 is Thr3.

In the embodiments of the disclosure, the multi-hop relay link can be formed by triggering a relay selection based on a trigger condition, which can further extend the communication distance and improve communication reliability and coverage.

FIG. 7 is a schematic flowchart of a method 700 for relay communication according to another embodiment of the disclosure. The method may include one or more features of the above-described method. In an implementation, the method further includes the following operation.

At S710, the first terminal monitors a link status of a link associated with the first terminal.

In an implementation, the link associated with the first terminal includes the direct link of the first terminal and/or one or more hops in the multi-hop relay link where the first terminal is located. For example, in a scenario of initial relay selection, the link associated with the first terminal may include the direct link of the first terminal. If the source terminal and the target terminal initially have a direct link, either the source terminal or the target terminal may monitor the link status of that link. For another example, in a scenario of relay reselection, the link associated with the first terminal may include one or more hops in the multi-hop relay link where the first terminal is located. If the multi-hop relay link where the first terminal is located includes the multi-hop links hop1, hop2, and hop3, where the hop2 and the hop3 are associated with the first terminal, and for example, if the hop2 is the link between the relay UE1 and the first terminal (e.g., the relay UE2) and the hop3 is the link from the relay UE2 to the target UE, then the first terminal (e.g., the relay UE2) is associated with both the hop2 and the hop3. The first terminal may monitor the link status of the hop2 and/or the hop3.

In the embodiments of the disclosure, the link status of the link associated with the first terminal may be monitored (also referred to as measured, detected, etc.) first, followed by a determination whether the first trigger condition is satisfied based on the link status. If the first trigger condition is satisfied, the first terminal triggers an initial selection or reselection of the relay.

In an implementation, the link status of the link associated with the first terminal includes at least one of: a link quality of the link associated with the first terminal; a link availability of the link associated with the first terminal; or a mobility change at a relay terminal in the link associated with the first terminal.

In an implementation, the link quality of the link associated with the first terminal includes at least one of: whether a PC5 link quality of the link associated with the first terminal falls below a configured threshold; or whether a Uu link quality of the link associated with the first terminal falls below a configured threshold.

For example, if the link quality of the PC5 link between the first terminal and the relay UE1 is less than or equal to the configured threshold, it may indicate poor link quality; and if the link quality is greater than the configured threshold, it may indicate good link quality.

For another example, if the link quality of the Uu link between the first terminal and the network device is less than or equal to the configured threshold, it may indicate poor link quality; and if the link quality is greater than the configured threshold, it may indicate good link quality.

In an implementation, the link availability of the link associated with the first terminal includes at least one of: whether the link associated with the first terminal has experienced a radio link failure (RLF); whether the link associated with the first terminal has been released; or whether the link associated with the first terminal has been successfully established.

For example, if the direct link of the first terminal experiences an RLF, the direct link becomes unavailable. For another example, if the first and second hops in the multi-hop relay link where the first terminal is located are released, the links at the first and second hops become unavailable; and if the third hop is not released, the third hop remains available. For another example, if the third hop in the multi-hop relay link where the first terminal is located fails to be established successfully, the third hop is unavailable; and if the second hop is successfully established, the second hop is available.

In an implementation, the mobility change at the relay terminal in the link associated with the first terminal includes at least one of: whether the relay terminal has experienced a cell reselection; or whether the relay terminal has experienced an HO.

For example, if the relay terminal in the direct link of the first terminal has experienced a cell reselection, the first terminal may trigger a selection or reselection of the relay terminal. If the relay terminal(s) at one or more hops in the multi-hop relay link where the first terminal is located has(have) experienced a HO, the first terminal may trigger the selection or reselection of the relay terminal.

In an implementation, the first terminal may transmit the link status monitored by the first terminal itself to other terminals or network devices to assist them in relay selection or reselection. A second trigger condition for the first terminal to transmit the link status may be referenced from the relevant description in the following embodiment of the method for relay communication performed by the second terminal, with the second terminal replaced by the first terminal.

FIG. 8 is a schematic flowchart of a method 800 for relay communication according to another embodiment of the disclosure. This method may include one or more features of the aforementioned methods. In an implementation, the method further includes the following operation. At S810, the first terminal receives the link status from the second terminal.

In an implementation, the second terminal is a relay terminal, a source terminal, a target terminal, or a remote terminal.

In the embodiments of the disclosure, the second terminal may monitor a link status of a link associated with the second terminal.

In an implementation, the link status of the link associated with the second terminal includes at least one of: a link quality of the link associated with the second terminal; a link availability of the link associated with the second terminal; or a mobility change at a relay terminal in the link associated with the second terminal.

In an implementation, the link quality of the link associated with the second terminal includes at least one of: whether a PC5 link quality of the link associated with the second terminal falls below a configured threshold; or whether a Uu link quality of the link associated with the second terminal falls below a configured threshold.

In an implementation, the link availability of the link associated with the second terminal includes at least one of: whether the link associated with the second terminal has experienced an RLF; whether the link associated with the second terminal has been released; or whether the link associated with the second terminal has been successfully established.

In an implementation, the mobility change at the relay terminal in the link associated with the second terminal includes at least one of: whether the relay terminal has experienced a cell reselection; or whether the relay terminal has experienced a HO.

In an implementation, the link status is carried by at least one of: PC5 non-access stratum signaling, a discovery messages, a direct communication request (DCR) message, a direct communication accept (DCA) message, PC5 radio resource control (PC5-RRC) signaling, or media access control control element (MAC CE) signaling. For example, the PC5 non-access stratum may include the ProSe layer and/or the V2X layer, etc.

In an implementation, the PC5-RRC signaling includes at least one of: a measurement report, or a notification message.

In an implementation, the link status includes at least one of: a connection condition of a serving hop, which is a hop where the second terminal is currently connected to another terminal or network device; or a connection condition of a candidate hop, which is a hop where the second terminal is potentially connected to another terminal or network device.

For example, the multi-hop relay link includes a source UE, a relay UE1, a relay UE2, and a target UE. The link between the source UE and the relay UE1 constitutes the first hop, the link between the relay UE1 and the relay UE2 constitutes the second hop, and the link between the relay UE2 and the target UE constitutes the third hop. The serving hop of the source UE may include the first hop, the serving hop of the relay UE1 may include the first hop and/or the second hop, the serving hop of the relay UE2 may include the second hop and/or the third hop, and the serving hop of the target UE may include the third hop.

For another example, the multi-hop relay link includes a remote UE, a relay UE1, a relay UE2, and a network device. The link between the remote UE and the relay UE1 constitutes the first hop, the link between the relay UE1 and the relay UE2 constitutes the second hop, and the link between the relay UE2 and the network device constitutes the third hop. The serving hop of the remote UE may include the first hop, the serving hop of the relay UE1 may include the first hop and/or the second hop, and the serving hop of the relay UE2 may include the second hop and/or the third hop.

In an implementation, the connection condition includes at least one of: a relay terminal identifier, a measurement result, a hop level, or serving cell information. For example, in the above example, the hop level for the relay UE1 may be 1, and the hop level for the relay UE2 may be 2.

In an implementation, the second terminal that transmits the link status is a relay terminal, and the first terminal that receives the link status includes at least one of: a source terminal and/or a target terminal with a normal link to the second terminal; a source terminal or a target terminal closer to the second terminal; a source terminal and/or a target terminal based on an implementation of the second terminal; or a source terminal triggering establishment of a connection between terminals. For example, the second terminal is an end for transmitting the link status, and this transmitting end is a relay terminal. The first terminal is an end for receiving the link status, and this receiving end may be a source terminal and/or a target terminal. For example, the receiving end includes: a source terminal and/or a target terminal with an intact link to the transmitting end, a source terminal or a target terminal closer to the transmitting end, a source terminal and/or a target terminal based on an implementation of the transmitting end, or a source terminal that triggers the establishment of the connection between terminals.

In the embodiments of the disclosure, in the U2U relay, one or more relay terminals may transmit the link status associated with them to the source terminal and/or the target terminal after monitoring the link status.

For example, the multi-hop relay link includes the source UE, the relay UE1, the relay UE2, and the target UE. If the link between the relay UE2 and the target UE is abnormal, such as being released or having poor link quality, and the link between the source UE and the relay UE1 is intact, the relay UE1 may transmit the link status to the source UE. Here, the relay UE1 may be the end for transmitting the link status, and the source UE may be the end for receiving the link status.

For another example, the multi-hop relay link includes the source UE, the relay UE1, the relay UE2, and the target UE. The relay UE1 may transmit the link status to the end closer to it, i.e., the source UE, and the relay UE2 may transmit the link status to the end closer to it, i.e., the target UE.

For another example, the end based on an implementation of the transmitting end may be determined based on a capability of the transmitting end. For example, the relay UE2 selects to transmit the link status to the source UE based on its own capability.

For another example, if the source UE is the end that triggers the establishment of the connection between terminals in the multi-hop relay link, both the relay UE1 and the relay UE2 may transmit the link status to the source UE.

In an implementation, the second terminal that transmits the link status is a relay terminal, and the first terminal that receives the link status is a remote terminal.

In an implementation, when the second terminal that transmits the link status is a relay terminal in a connected state, the end for receiving the link status may be the remote terminal and/or a network device.

For example, when the end for transmitting the link status is a relay terminal in a connected state, the end for receiving the link status is the remote terminal and/or a network device.

For another example, when the end for transmitting the link status is a relay terminal in a non-connected state, the end for receiving the link status is the remote terminal.

In the embodiments of the disclosure, in the U2N relay, one or more relay terminals may transmit the link status associated with them to the network device and/or the remote terminal after monitoring the link status. For example, the multi-hop relay link includes the remote UE, the relay UE1, the relay UE2, and the network device. If a connection has been established between the relay UE2 and the network device, the relay UE2 may transmit the link status to the network device. If the relay UE2 has not established a connection with the network device, the link status may be transmitted to the remote terminal via the relay UE1.

In an implementation, the first terminal selects the relay terminal based on at least one of: a PC5 link quality between the first terminal and a candidate relay terminal; meeting a high-layer criterion; meeting an experienced hop level limit for relaying; meeting a buffer capacity requirement of the relay terminal; the relay terminal supporting a multi-hop; a serving cell and/or a PLMN of the relay terminal meeting requirements; or a link quality of a next hop or multiple hops of the relay terminal exceeding a configured threshold, where the configured threshold for each hop may be the same or different.

For example, the first terminal is the source UE, among the links between the source UE and UE1, UE2, UE3, the PC5 link between the source UE and the UE2 exhibits the best link quality. In this case, the source UE may select the UE2 as the relay UE.

For another example, the high-layer criterion includes RSC indication information. The first terminal, such as the target UE, may select the relay UE based on the RSC within this indication information.

For another example, if a hop level for a current servicing relay experienced by the first terminal (e.g., the target UE) is 3, the target UE may only select a relay link that can reach the target UE within 3 hops. This limit may be configured by a network or related to QoS/service.

For another example, if the buffer capacity of the UE3 exceeds a set value, the first terminal (e.g., the relay UE2) may select the UE3 as the relay UE.

For another example, if the UE1 supports a multi-hop relay while the UE2 does not support the multi-hop relay, the first terminal (e.g., the remote UE) may select the UE1 as the relay UE.

For another example, the network may configure requirements for the serving cell and/or the PLMN to which the relay UE belongs. It is assumed that UEs belonging to a serving cell 1, a serving cell 2, and PLMN1 may serve as relay UEs. If the UE1 belongs to the serving cell 1, the UE2 belongs to the serving cell 3, and the UE3 belongs to the PLMN1, the serving cell to which the UE1 belongs and the PLMN to which the UE3 belongs meet requirements, so the UE1 and the UE3 may be selected as the relay UEs. The serving cell to which the UE2 belongs does not meet the requirements, and the UE2 is not selected as a relay UE.

For another example, if a next hop of the UE1 is the UE2, a further next hop is the UE3, the link quality between the UE1 and the UE2 exceeds a configured threshold 1, and the link quality between the UE2 and the UE3 exceeds a configured threshold 2, then in this case, the first terminal (e.g., the source terminal) may select the UE1 as the relay UE.

FIG. 9 is a schematic flowchart of a method 900 for relay communication according to an embodiment of the disclosure. This method may optionally be applied to the systems illustrated in FIG. 1 to FIG. 5, but is not limited thereto. The method includes at least some of the following content.

At S910, a second terminal transmits a link status. The link status is related to a first trigger condition, and the first trigger condition is used for triggering a first terminal to select a relay terminal that meets requirements of the first terminal. The first terminal, the second terminal, and the relay terminal are located in a multi-hop relay link.

In an implementation, the operation in S910 that the second terminal transmits the link status includes the following action. The second terminal periodically transmits the link status. For example, after monitoring the link status or receiving the link status from another terminal, the second terminal may periodically transmit the link status to the first terminal.

In an implementation, the operation in S910 that the second terminal transmits the link status includes the following action. The second terminal transmits the link status based on a second trigger condition.

In an implementation, the second trigger condition includes at least one of the following events occurring: a measurement result of a reference signal by the second terminal being greater than or equal to a configured threshold; a difference between a current measurement result and a previous measurement result of the reference signal by the second terminal exceeding a configured threshold; the second terminal having experienced an RLF; a link associated with the second terminal being released; a link associated with the second terminal having experienced a connection establishment failure; a mobility change occurring in a relay terminal in a link associated with the second terminal; the second terminal receiving a measurement or monitoring result from a relay terminal; or the second terminal receiving a request from a terminal at a previous hop of the second terminal.

The link associated with the second terminal includes a direct link of the second terminal and/or one or more hops in the multi-hop relay link where the second terminal is located.

In the embodiments of the disclosure, the link associated with the second terminal may include the direct link of the second terminal, or may include one or more hops of the multi-hop relay link where the second terminal is located.

In the embodiments of the disclosure, along a data transmission direction of the multi-hop relay link, the terminal at the previous hop of the second terminal may transmit data to the second terminal, and the second terminal may transmit data to a terminal at a next hop of the second terminal.

In an implementation, the link status is carried by at least one of: PC5 non-access stratum signaling, a discovery message, a DCR message, a DCA message, PC5-RRC signaling, or MAC CE signaling.

In an implementation, the PC5-RRC signaling includes at least one of: a measurement report or a notification message.

In an embodiment, the link status includes at least one of: a connection condition of a serving hop, which is a hop where the second terminal is currently connected to another terminal or network device; or a connection condition of a candidate hop, which is a hop where the second terminal is potentially connected to another terminal or network device.

In an embodiment, the connection condition includes at least one of: a relay terminal identifier, a measurement result, a hop level, or serving cell information.

In an implementation, the second terminal that transmits the link status is a relay terminal, and the first terminal that receives the link status includes at least one of: a source terminal and/or a target terminal with a normal link to the second terminal; a source terminal or a target terminal closer to the second terminal; a source terminal and/or a target terminal based on an implementation of the second terminal; or a source terminal triggering establishment of a connection between terminals.

In an implementation, the second terminal that transmits the link status is a relay terminal, and the first terminal that receives the link status is a remote terminal.

In an implementation, when the second terminal that transmits the link status is a relay terminal in a connected state, the end for receiving the link status further includes the network device.

Specific examples of the second terminal executing the method 900 for relay communication in this embodiment may refer to the relevant descriptions regarding the second terminal in the methods 600, 700, and 800 for relay communication executed by the first terminal as described above. For brevity, the description is not repeated here.

The method for relay communication in the embodiments of the disclosure may include a relay selection and/or reselection mechanism in a sidelink multi-hop relay technology. For example, a multi-hop relay selection/reselection mechanism may be further provided based on the relay selection/reselection in the single-hop U2U/U2N relay technology. This mechanism may include at least one of the following solutions: a multi-hop relay selection and reselection trigger condition; a multi-hop relay selection and reselection procedure; or determination of a relay that meets the condition. Several specific examples are provided below.

First example: the multi-hop relay selection/reselection trigger condition.
I. The relay selection trigger condition may include at least one of the following. (1) Triggering by an upper layer (e.g., a V2X/Prose layer).

(2) A link quality falls below a specified threshold, as illustrated below.

For example, in the U2U relay, a PC5 link quality (SL-RSRP/SD-RSRP) with the peer UE falls below a configured threshold 1.

For another example, in the U2N relay, a Uu link quality with the network falls below a configured threshold 2.

The aforementioned configured thresholds may originate from one or more of an RRC configuration, an SIB configuration, or a pre-configuration.

(3) A radio link failure occurs in the link with the peer UE/network.

II. The relay reselection trigger condition may include at least one of the following.
(1) Triggering by the upper layer (the V2X/Prose layer).
(2) A link quality of any hop in the current link falls below the threshold, including at least one of the following examples.

For example, in the U2U MH (multi-hop) relay, a PC5 link quality (SL-RSRP/SD-RSRP) at any hop falls below the configured threshold 1.

For another example, in the U2N MH relay, a PC5 link quality (SL-RSRP/SD-RSRP) at any hop falls below the configured threshold 2, or a Uu link quality from the relay at the last hop to the network falls below a configured threshold 3.

The above configured thresholds originate from the RRC configuration/SIB configuration/pre-configuration/relay (or the network of the relay) configuration/source UE (or the network of the source UE) configuration. The configured thresholds for different hops may be the same or different.

(3) A radio link failure occurs at any hop (PC5/Uu).

(4) A link at any hop is released.

(5) The relay UE at any hop in the U2N MH relay has experienced a cell reselection, an HO, or an RRC connection establishment failure.

(6) The relay UE at any hop transmits an indication information. This indication information may indicate that a link failure, a link release, a poor link quality, a cell reselection, an HO, or an RRC connection establishment failure occurs at the hop where the relay UE is located.

Second example: the multi-hop relay selection/reselection procedure - a centralized relay selection/reselection.

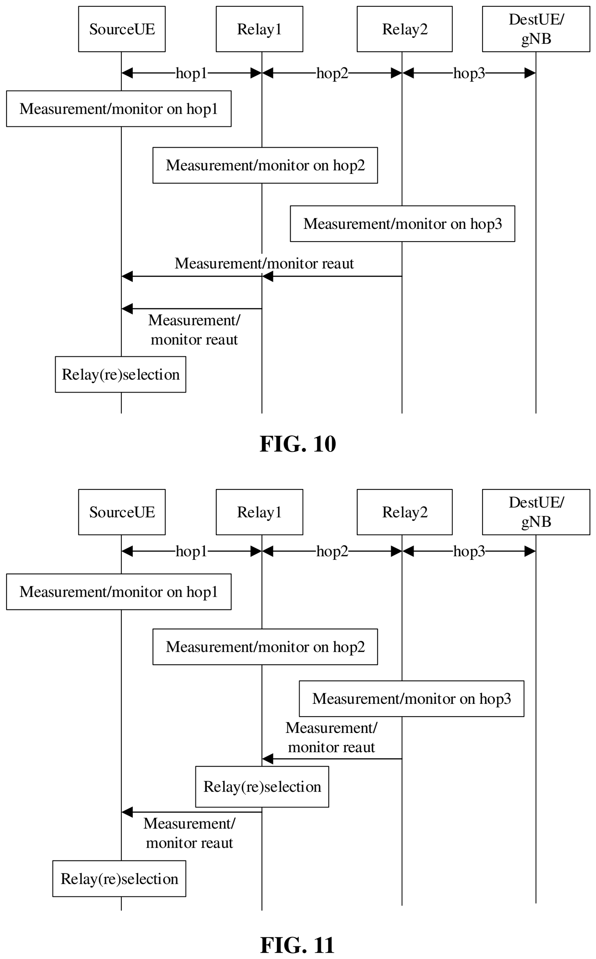

FIG. 10 is a schematic flowchart illustrating the centralized relay selection/reselection procedure according to the second example of the disclosure. The operations are as follows.
1. UE at each hop monitors/measures a status of its egress-hop (i.e., an example of the link status), which includes at least one of the following.

A link quality of a PC5/Uu link(s) for one or multiple hops (e.g., the hop may be marked as egress-hop), such as SL-RSRP, SD-RSRP, or Uu-RSRP.

An availability of the PC5/Uu link(s) for one or more hops, including: whether an RLF has occurred, whether the link has released, or whether the link has successfully established.

For the U2N relay, whether the relay UE has experienced mobility changes such as an HO or a cell reselection.

For example, one or more hops may include a hop distant from the source UE, such as a hop distant from the source UE/the target UE (end UEs).

2. The relay UE at each hop may transmit the monitored/measured status of its one or more hops to the remote/source UE.

2-1. Transmission methods may include at least one of the following.
(1) The U2U relay transmits the status to both end UEs, or to only one end UE. The selected end UE is: the end with an intact link/a closer end/a UE implementation-based end/an end triggering U2U connection establishment.
(2) The U2N relay transmits the status to both the UE and the network, or only to the UE. For example, the relay in a connected state transmits the status to the network and/or the remote UE. For example, the relay in a non-connected state transmits the status to the remote UE.

2-2. The transmission may be triggered conditionally or periodically, as illustrated below.
(1) A period for periodic triggering may be configured by the upper layer (the V2X/Prose layer) or the access stratum (AS) (a base station or a source UE).
(2) An event for event triggering may be at least one of the following.

A measured RSRP exceeds and/or falls below a certain threshold. The threshold is configured by the relay UE (or the network of the relay UE)/the remote UE (or the network of the remote UE)/the network to which the U2N is currently connected.

A difference between the measured RSRP and a previous measurement exceeds (better than or worse than) a certain threshold (or within a certain duration). The threshold and duration are configured by the relay UE (or the network of the relay UE)/the remote UE (or the network of the remote UE)/the network to which the U2N is currently connected.

RLF occurs, the link is released, or a connection establishment failure occurs.

Mobility changes such as the HO or the cell reselection occur.

A measurement/monitoring result from another relay is received (or forwarded).

A request is received from the source-end UE (also referred to as the source UE, the source terminal, etc.).

2-3. The information (i.e., the status of one or more hops) may be carried by at least one of the following signaling.

PC5 access stratum signaling: a discovery message (Model-A/B), a DCR message, a DCA message, or other.

PC5-RRC signaling: a measurement report, a notification message, or other signaling.

### MAC CE signaling.

2-4. The information (i.e., the status of one or more hops) may include at least one of the following.

For example, a connection condition of a current (if present) serving hop, such as: Relay UE ID (L2 ID), a measurement result, a hop level, or serving cell information.

For another example, a status of an optional candidate hop, e.g., Relay UE ID (L2 ID), a measurement result, a hop level, or serving cell information.

Here, the serving hop may include a hop established and connected to the terminal in the multi-hop relay link. For example, the serving hop of the relay 1 includes the hop2, and the serving hop of the relay 2 includes the hop3. The candidate hop of the terminal may include a hop with which the terminal could potentially establish a connection. For example, the candidate hop between the relay 1 and a candidate relay 3 includes a hop4, and the candidate hop between the candidate relay 3 and the target UE includes a hop5. Here, the hop4 and the hop5 are hops that have not yet been connected.

3. The source/remote UE performs relay selection or reselection to choose a relay UE that meets requirements of the upper layer and the AS. Examples of selection methods include: performing relay selection or reselection based on the status of the local hop detected by the UE itself; and/or performing relay selection or reselection based on content of information after receiving the information from other hops.

Third example: multi-hop relay selection/reselection procedure - distributed relay selection and reselection

FIG. 11 is a schematic flowchart illustrating distributed relay selection/reselection according to the third example of the disclosure. The operations are as follows.
1. UE at each hop monitors/measures a status of its egress-hop, which includes at least one of the following.

A link quality of a PC5/Uu link of the egress-hop (SL-RSRP/SD-RSRP/Uu-RSRP).

An availability of the PC5/Uu link of the egress-hop, including: whether an RLF has occurred, whether the link has released, or whether the link has successfully established.

For the U2N relay, whether the relay UE has experienced mobility changes such as an HO or a cell reselection.

2. The UE at each hop may transmit the monitored/measured status of its egress-hop to the UE at the previous hop (if present).

2-1. The transmission may be triggered conditionally or periodically, as illustrated below.
(1) A period for periodic triggering may be configured by the upper layer (the V2X/Prose layer) or the AS (a base station or a source UE).
(2) An event for event triggering may be at least one of the following.

A measured RSRP exceeds and/or falls below a certain threshold. The threshold is configured by the relay UE (or the network of the relay UE)/the remote UE (or the network of the remote UE)/the network to which the U2N is currently connected.

A difference between the measured RSRP and a previous measurement exceeds (better than or worse than) a certain threshold (or within a certain duration). The threshold and duration are configured by the relay UE (or the network of the relay UE)/the remote UE (or the network of the remote UE)/the network to which the U2N is currently connected.

RLF occurs, the link is released, or a connection establishment failure occurs.

Mobility changes such as the HO or the cell reselection occur.

A measurement/monitoring result from another relay is received (forwarded).

A request is received from the UE at the previous hop.

2-3. The information may be carried by at least one of the following signaling.

PC5-S signaling: a discovery message (Model-A/B), a DCR message, a DCA message, or other.

PC5-RRC signaling: a measurement report, a notification message, or other signaling.

### MAC CE signaling.

2-4. The information may include at least one of the following.

For example, a connection condition of a current (if present) serving hop, such as: Relay UE ID (L2 ID), a measurement result, a hop level, or serving cell information.

For another example, a status of an optional candidate hop, e.g., Relay UE ID (L2 ID), a measurement result, a hop level, or serving cell information.

3. The UE at each hop performs relay selection or reselection to choose a relay UE that meets requirements of the upper layer and the AS based on the status of the local hop detected by the UE itself and/or content of information after receiving the information from the next hop.

Fourth example: multi-hop relay selection criteria

For example, the relay selection may meet at least one of the following criteria.

A quality of a PC5 link with the relay, including SL-RSRP and/or SD-RSRP values exceeding a certain threshold (exceeding a certain threshold from the current serving relay).

Meeting a high-layer criterion, such as RSC indication information.

Meeting an experienced hop level limit for relaying (less than a hop level of the current serving relay).

Meeting a buffer capacity requirement of the relay.

The relay supports a multi-hop.

A serving cell and/or a PLMN of the relay meet requirements.

A link quality of a next hop or multiple hops of the relay exceeds a certain threshold, where the configured threshold for each hop may be the same or different.

The above examples illustrate a multi-hop U2U/U2N relay selection/reselection procedure, which can extend a communication distance and enhance a communication reliability and coverage.

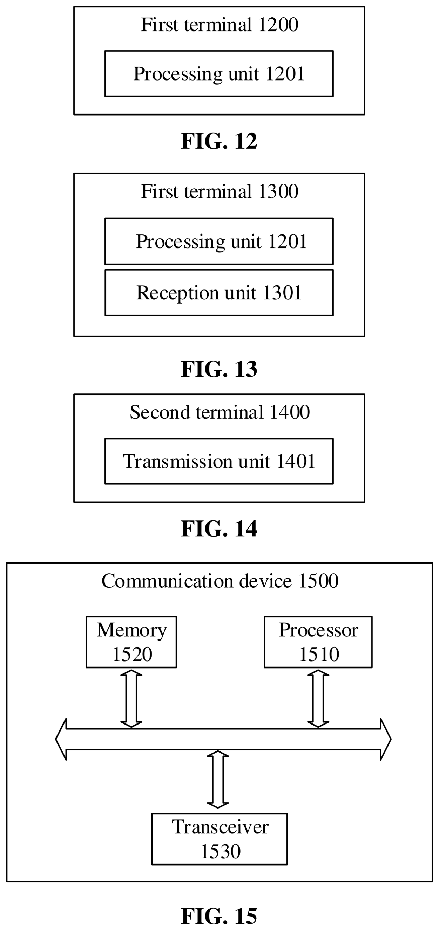

FIG. 12 is a schematic block diagram of a first terminal 1200 according to an embodiment of the disclosure. The first terminal 1200 includes a processing unit 1201.

The processing unit 1201 is configured to select a relay terminal that meets requirements of the first terminal based on a first trigger condition. The first terminal and the relay terminal are located in a multi-hop relay link, and the first trigger condition is related to a link status.

In an implementation, the first trigger condition includes at least one of the following relay selection trigger conditions: an upper layer triggering at the first terminal; a link quality of a direct link of the first terminal falling below a configured threshold; a radio link failure occurring in a direct link of the first terminal; a link quality between the first terminal and one or more candidate relay terminals exceeding a configured threshold; or a difference between a link quality between the first terminal and one or more candidate relay terminals and a link quality of a direct link of the first terminal exceeding a configured threshold.

In an implementation, the link quality of the direct link of the first terminal falling below the configured threshold includes at least one of: a PC5 link quality between the first terminal and a directly connected terminal falling below a configured threshold; or a Uu link quality between the first terminal and a directly connected network device falling below a configured threshold.

In an implementation, the configured threshold(s) for the PC5 link and/or the Uu link is(are) configured via an RRC configuration, an SIB configuration, or a pre-configuration.

In an implementation, the first trigger condition includes at least one of the following relay reselection trigger conditions: an upper layer triggering at the first terminal; a link quality of one or more hops in the multi-hop relay link where the first terminal is located falling below a configured threshold; a radio link failure occurring at one or more hops in the multi-hop relay link where the first terminal is located; a link(s) at one or more hops in the multi-hop relay link where the first terminal is located being released; a cell reselection, an HO, or an RRC connection establishment failure occurring in a relay terminal(s) at one or more hops in the multi-hop relay link where the first terminal is located; or indication information from a relay terminal(s) at one or more hops in the multi-hop relay link where the first terminal is located.

In an implementation, the link quality of one or more hops in the multi-hop relay link where the first terminal is located falling below the configured threshold includes at least one of: a PC5 link quality of one or more hops in a link between the first terminal and a second terminal falling below a configured threshold; a PC5 link quality of one or more hops in a link between the first terminal and a network device falling below a configured threshold; or a Uu link quality between a relay terminal, at a first or last hop in a link between the first terminal and a network device, and a network falling below a configured threshold.

For example, if the first terminal is a source terminal, the second terminal may be a target terminal or a relay terminal. If the first terminal is a target terminal, the second terminal may be a source terminal or a relay terminal. If the first terminal is a remote terminal, the second terminal may be a relay terminal. If the first terminal is a relay terminal, the second terminal may be a source terminal, a target terminal, a remote terminal, or a relay terminal other than the first terminal.

In an implementation, the configured threshold(s) for the PC5 link and/or the Uu link is(are) configured by at least one of: an RRC configuration, an SIB configuration, a pre-configuration, a configuration from a relay, a configuration from a network to which the relay belongs, a configuration from a source terminal, or a configuration from a network to which the source terminal belongs.

In an implementation, the thresholds for different hops in the multi-hop relay link where the first terminal is located may be configured to be the same or different.

In an implementation, the indication information indicates at least one of: a link failure, a link release, or a link quality below a configured threshold occurring at a hop where the relay terminal is located, or a cell reselection, an HO, or an RRC connection establishment failure occurring at the relay terminal.

In an implementation, the first terminal is the remote terminal, the source terminal, the target terminal, or the relay terminal in the multi-hop relay link.

In an implementation, the processing unit is further configured to monitor a link status of a link associated with the first terminal.

The link associated with the first terminal includes the direct link of the first terminal and/or one or more hops in the multi-hop relay link where the first terminal is located.

In an implementation, the link status of the link associated with the first terminal includes at least one of: a link quality of the link associated with the first terminal; a link availability of the link associated with the first terminal; or a mobility change at a relay terminal in the link associated with the first terminal.

In an implementation, the link quality of the link associated with the first terminal includes at least one of: whether a PC5 link quality of the link associated with the first terminal falls below a configured threshold; or whether a Uu link quality of the link associated with the first terminal falls below a configured threshold.

In an implementation, the link availability of the link associated with the first terminal includes at least one of: whether the link associated with the first terminal has experienced an RLF; whether the link associated with the first terminal has been released; or whether the link associated with the first terminal has been successfully established.

In an implementation, the mobility change at the relay terminal in the link associated with the first terminal includes at least one of: whether the relay terminal has experienced a cell reselection; or whether the relay terminal has experienced an HO.

In an implementation, as shown in FIG. 13, the first terminal 1300 further includes a reception unit 1301.

The reception unit 1301 is configured to receive the link status from the second terminal. The second terminal is a relay terminal, a source terminal, a target terminal, or a remote terminal.

In an implementation, the link status is carried by at least one of: PC5 non-access stratum signaling, a discovery messages, a DCR message, a DCA message, PC5-RRC signaling, or MAC CE signaling.

In an implementation, the PC5-RRC signaling includes at least one of: a measurement report, or a notification message.

In an implementation, the link status includes at least one of: a connection condition of a serving hop, which is a hop where the second terminal is currently connected to another terminal or network device; or a connection condition of a candidate hop, which is a hop where the second terminal is potentially connected to another terminal or network device.

In an implementation, the connection condition includes at least one of: a relay terminal identifier, a measurement result, a hop level, or serving cell information.

In an implementation, the second terminal that transmits the link status is a relay terminal, and the first terminal that receives the link status includes at least one of: a source terminal and/or a target terminal with a normal link to the second terminal; a source terminal or a target terminal closer to the second terminal; a source terminal and/or a target terminal based on an implementation of the second terminal; or a source terminal triggering establishment of a connection between terminals.

In an implementation, the second terminal that transmits the link status is a relay terminal, and the first terminal that receives the link status is a remote terminal.

In an implementation, when the second terminal that transmits the link status is a relay terminal in a connected state, an end for receiving the link status may further include a network device.

In an implementation, the first terminal selects the relay terminal based on at least one of: a PC5 link quality between the first terminal and a candidate relay terminal; meeting a high-layer criterion; meeting an experienced hop level limit for relaying; meeting a buffer capacity requirement of the relay terminal; the relay terminal supporting a multi-hop; a serving cell and/or a PLMN of the relay terminal meeting requirements; or a link quality of a next hop or multiple hops of the relay terminal exceeding a configured threshold, where the configured threshold for each hop may be the same or different.

The first terminals 1200 and 1300 in the embodiments of the disclosure can implement the functions corresponding to the first terminal in the aforementioned method embodiments. A process, function, implementation, and beneficial effect corresponding to each module (submodule, unit, or component, etc.) in the first terminals 1200 and 1300 may refer to the corresponding description in the aforementioned method embodiments and are not repeated here. It should be noted that the functions described for respective modules (submodules, units, or components, etc.) in the first terminals 1200 and 1300 in the embodiments of the disclosure may be implemented by different modules (submodules, units, or components, etc.) or by the same module (submodule, unit, or component, etc.).

FIG. 14 is a schematic block diagram of a second terminal 1400 according to an embodiment of the disclosure. The second terminal 1400 includes a transmission unit 1401.

The transmission unit 1401 is configured to transmit a link status. The link status is related to a first trigger condition, and the first trigger condition is used for triggering a first terminal to select a relay terminal that meets requirements of the first terminal. The first terminal, the second terminal, and the relay terminal are located in a multi-hop relay link.

In an implementation, the transmission unit is configured to periodically transmit the link status.

In an implementation, the transmission unit is configured to transmit the link status based on a second trigger condition.

In an implementation, the second trigger condition includes at least one of the following events occurring: a measurement result of a reference signal by the second terminal being greater than or equal to a configured threshold; a difference between a current measurement result and a previous measurement result of the reference signal by the second terminal exceeding a configured threshold; the second terminal having experienced an RLF; a link associated with the second terminal being released; a link associated with the second terminal having experienced a connection establishment failure; a mobility change occurring in a relay terminal in a link associated with the second terminal; the second terminal receiving a measurement or monitoring result from a relay terminal; or the second terminal receiving a request from a terminal at a previous hop of the second terminal.

The link associated with the second terminal includes a direct link of the second terminal and/or one or more hops in the multi-hop relay link where the second terminal is located.

In an implementation, the link status is carried by at least one of: PC5 non-access stratum signaling, a discovery message, a DCR message, a DCA message, PC5-RRC signaling, or MAC CE signaling.

In an implementation, the PC5-RRC signaling includes at least one of: a measurement report or a notification message.

In an embodiment, the link status includes at least one of: a connection condition of a serving hop, which is a hop where the second terminal is currently connected to another terminal or network device; or a connection condition of a candidate hop, which is a hop where the second terminal is potentially connected to another terminal or network device.

In an embodiment, the connection condition includes at least one of: a relay terminal identifier, a measurement result, a hop level, or serving cell information.

In an implementation, the second terminal that transmits the link status is a relay terminal, and the first terminal that receives the link status includes at least one of: a source terminal and/or a target terminal with a normal link to the second terminal; a source terminal or a target terminal closer to the second terminal; a source terminal and/or a target terminal based on an implementation of the second terminal; or a source terminal triggering establishment of a connection between terminals.

In an implementation, the second terminal that transmits the link status is a relay terminal, and the first terminal that receives the link status is a remote terminal.

In an implementation, when the second terminal that transmits the link status is a relay terminal in a connected state, the end for receiving the link status further includes the network device.

The second terminal 1400 in the embodiments of the disclosure can implement the functions corresponding to the second terminal in the aforementioned method embodiments. A process, function, implementation, and beneficial effect corresponding to each module (submodule, unit, or component, etc.) in the second terminal 1400 may refer to the corresponding description in the aforementioned method embodiments and are not repeated here. It should be noted that the functions described for respective modules (submodules, units, or components, etc.) in the second terminal 1400 in the embodiments of the disclosure may be implemented by different modules (submodules, units, or components, etc.) or by the same module (submodule, unit, or component, etc.).

FIG. 15 is a schematic structural diagram of a communication device 1500 according to an embodiment of the disclosure. The communication device 1500 includes a processor 1510. The processor 1510 may be configured to call a computer program from a memory and execute the computer program to enable the communication device 1500 to implement the methods in the embodiments of the disclosure.

In an implementation, the communication device 1500 may further include a memory 1520. The processor 1510 may call the computer program from the memory 1520 and execute the computer program to enable the communication device 1500 to implement the methods in the embodiments of the disclosure.

The memory 1520 may be a separate device independent of the processor 1510 or may be integrated within the processor 1510.

In an implementation, the communication device 1500 may further include a transceiver 1530. The processor 1510 may control the transceiver 1530 to communicate with other devices, specifically to transmit information or data to other devices or to receive information or data from other devices.

The transceiver 1530 may include a transmitter and a receiver. The transceiver 1530 may further include antennas, the number of which may be one or more.

In an implementation, the communication device 1500 may be the first terminal in the embodiments of the disclosure, and the communication device 1500 may implement the corresponding processes performed by the first terminal in the various methods in the embodiments of the disclosure. For brevity, details will not be elaborated herein again.

In an implementation, the communication device 1500 may be the second terminal in the embodiments of the disclosure, and the communication device 1500 may implement the corresponding processes performed by the second terminal in the various methods in the embodiments of the disclosure. For brevity, details will not be elaborated herein again.

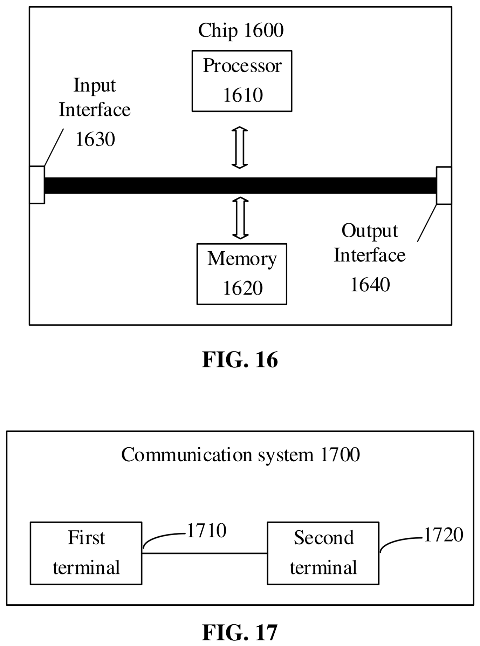

FIG. 16 is a schematic structural diagram of a chip 1600 according to an embodiment of the disclosure. The chip 1600 includes a processor 1610. The processor 1610 may be configured to call a computer program from a memory and execute the computer program to implement the methods in the embodiments of the disclosure.

In an implementation, the chip 1600 may further include a memory 1620. The processor 1610 may call the computer program from the memory 1620 and execute the computer program to implement the methods performed by the first terminal or the second terminal in the embodiments of the disclosure.

The memory 1620 may be a separate device independent of the processor 1610 or may be integrated within the processor 1610.

In an implementation, the chip 1600 may further include an input interface 1630. The processor 1610 may control the input interface 1630 to communicate with other devices or chips, specifically to acquire information or data transmitted by other devices or chips.

In an implementation, the chip 1600 may further include an output interface 1640. The processor 1610 may control the output interface 1640 to communicate with other devices or chips, specifically to output information or data to other devices or chips.

In an implementation, the chip may be applied to the first terminal in the embodiments of the disclosure, and the chip may implement the corresponding processes performed by the first terminal in the various methods in the embodiments of the disclosure. For brevity, details will not be elaborated herein again.

In an implementation, the chip may be applied to the second terminal in the embodiments of the disclosure, and the chip may implement the corresponding processes performed by the second terminal in the various methods in the embodiments of the disclosure. For brevity, details will not be elaborated herein again.

The chips applied to the first terminal and the second terminal may be the same chip or different chips.

It should be understood that the chip referred to in the embodiments of the disclosure may also be referred to as a system-level chip, a system chip, a chip system or a system on chip, etc.

The processor mentioned above may be a general-purpose processor, a digital signal processor (DSP), a field-programmable gate array (FPGA), an application-specific integrated circuit (ASIC), other programmable logic devices, transistor logic devices, or discrete hardware components, etc. The general-purpose processor mentioned above may be a microprocessor or any conventional processor, etc.

The memory mentioned above may be a volatile memory or a non-volatile memory, or may include both the volatile and non-volatile memories. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM).

It should be understood that the above memories are illustrative but not limiting. For example, the memory in the embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct Rambus RAM (DR RAM), and the like. That is, the memory in the embodiments of the disclosure is intended to include, but is not limited to, these and any other suitable types of memories.

FIG. 17 is a schematic block diagram of a communication system 1700 according to an embodiment of the disclosure. The communication system 1700 includes a first terminal 1710 and a second terminal 1720.

The first terminal 1710 is configured to select a relay terminal that meets requirements of the first terminal based on a first trigger condition. The first terminal and the relay terminal are located in a multi-hop relay link, and the first trigger condition is related to a link status.

The second terminal 1720 is configured to transmit the link status. The first trigger condition triggers the first terminal to select a relay terminal that meets the requirements of the first terminal, and the first terminal, the second terminal, and the relay terminal are located in the multi-hop relay link.

Herein, the first terminal 1710 may be configured to implement the corresponding functions performed by the first terminal in the aforementioned methods, and the second terminal 1720 may be configured to implement the corresponding functions performed by the second terminal in the aforementioned methods. For brevity, details will not be elaborated herein again.

The above embodiments may be implemented in whole or in part by software, hardware, firmware or any combination thereof. When implemented in the form of software, the embodiments may be implemented in whole or in part in the form of a computer program product. The computer program product includes one or more computer instructions. When the computer program instructions are loaded and executed on a computer, all or part of the processes or functions described in accordance with the embodiments of the disclosure are generated. The computer may be a general-purpose computer, a special-purpose computer, a computer network, or other programmable devices. The computer instructions may be stored in a computer-readable storage medium or transmitted from a computer-readable storage medium to another computer-readable storage medium. For example, the computer instructions may be transmitted from a web site, a computer, a server, or a data center to another web site, computer, server, or data center through a wired (e.g. a coaxial cable, an optical fiber, a digital subscriber line (DSL)) or wireless (e.g. an infrared, a wireless, a microwave, etc.) manner. The computer-readable storage medium may be any available medium accessible to a computer or a data storage device such as a server, a data center, or the like that integrated with one or more available media. The available medium may be a magnetic medium (e.g. a floppy disk, a hard disk, a magnetic tape), an optical medium (e.g. a digital versatile disc (DVD)), or a semiconductor medium (e.g. a solid state disk (SSD)), etc.

It should be understood that in various embodiments of the disclosure, an order of the serial numbers of the above-mentioned processes does not imply an execution order, the execution order of various processes are determined based on their functions and inherent logics, and should not constitute any limitation on the implementation process of the embodiments of the disclosure.

Those skilled in the art will readily appreciate that, for the purpose of convenient and brief description, the detailed working processes of the foregoing system, device, and unit may refer to the corresponding processes in the foregoing method embodiments, and details are not elaborated herein again.

The foregoing descriptions are merely specific implementations of the disclosure, but the scope of protection of the disclosure is not limited thereto. Any variation or replacement readily figured out by a person skilled in the art within the technical scope disclosed in the disclosure shall fall within the scope of protection of the disclosure. Therefore, the scope of protection of the disclosure shall be subject to the scope of protection of the claims.

## Claims

1. A method for relay communication, comprising:
selecting, by a first terminal, a relay terminal that meets requirements of the first terminal based on a first trigger condition, wherein the first terminal and the relay terminal are located in a multi-hop relay link, and the first trigger condition is related to a link status.

2. The method of claim 1, wherein the first trigger condition comprises at least one of the following relay selection trigger conditions:
an upper layer triggering at the first terminal;
a link quality of a direct link of the first terminal falling below a configured threshold;
a radio link failure occurring in a direct link of the first terminal;
a link quality between the first terminal and one or more candidate relay terminals exceeding a configured threshold; or
a difference between a link quality between the first terminal and one or more candidate relay terminals and a link quality of a direct link of the first terminal exceeding a configured threshold.

3. The method of claim 2, wherein the link quality of the direct link of the first terminal falling below the configured threshold comprises at least one of:
a direct communication interface (PC5) link quality between the first terminal and a directly connected terminal falling below a configured threshold; or
a Uu link quality between the first terminal and a directly connected network device falling below a configured threshold.

4. The method of claim 3, wherein the configured thresholds for the PC5 link and/or the Uu link are configured via a radio resource control (RRC) configuration, a system information block (SIB) configuration, or a pre-configuration.

5. The method of any one of claims 1 to 4, wherein the first trigger condition comprises at least one of the following relay reselection trigger conditions:
an upper layer triggering at the first terminal;
a link quality of one or more hops in the multi-hop relay link where the first terminal is located falling below a configured threshold;
a radio link failure occurring at one or more hops in the multi-hop relay link where the first terminal is located;
a link at one or more hops in the multi-hop relay link where the first terminal is located being released;
a cell reselection, a handover (HO), or an RRC connection establishment failure occurring in a relay terminal at one or more hops in the multi-hop relay link where the first terminal is located; or
indication information from a relay terminal at one or more hops in the multi-hop relay link where the first terminal is located.

6. The method of claim 5, wherein the link quality of one or more hops in the multi-hop relay link where the first terminal is located falling below the configured threshold comprises at least one of:
a PC5 link quality of one or more hops in a link between the first terminal and a second terminal falling below a configured threshold;
a PC5 link quality of one or more hops in a link between the first terminal and a network device falling below a configured threshold; or
a Uu link quality between a relay terminal, at a first or last hop in a link between the first terminal and a network device, and the network falling below a configured threshold.

7. The method of claim 6, wherein the configured thresholds for the PC5 link and/or the Uu link are configured by at least one of: an RRC configuration, an SIB configuration, a pre-configuration, a configuration from a relay, a configuration from a network to which the relay belongs, a configuration from a source terminal, or a configuration from a network to which the source terminal belongs.

8. The method of any one of claims 5 to 7, wherein the thresholds for different hops in the multi-hop relay link where the first terminal is located are configured to be the same or different.

9. The method of any one of claims 5 to 8, wherein the indication information indicates at least one of: a link failure, a link release, or a link quality below a configured threshold occurring at the hop where the relay terminal is located, or a cell reselection, an HO, or an RRC connection establishment failure occurring at the relay terminal.

10. The method of any one of claims 1 to 9, wherein the first terminal is a remote terminal, a source terminal, a target terminal, or a relay terminal in the multi-hop relay link.

11. The method of any one of claims 1 to 10, further comprising:
monitoring, by the first terminal, a link status of a link associated with the first terminal,
wherein the link associated with the first terminal comprises a direct link of the first terminal and/or one or more hops in the multi-hop relay link where the first terminal is located.

12. The method of claim 11, wherein the link status of the link associated with the first terminal comprises at least one of:
a link quality of the link associated with the first terminal;
a link availability of the link associated with the first terminal; or
a mobility change at a relay terminal in the link associated with the first terminal.

13. The method of claim 12, wherein the link quality of the link associated with the first terminal comprises at least one of:
whether a PC5 link quality of the link associated with the first terminal falls below a configured threshold; or
whether a Uu link quality of the link associated with the first terminal falls below a configured threshold.

14. The method of claim 12 or 13, wherein the link availability of the link associated with the first terminal comprises at least one of:
whether the link associated with the first terminal has experienced a radio link failure (RLF);
whether the link associated with the first terminal has been released; or
whether the link associated with the first terminal has been successfully established.

15. The method of any one of claims 12 to 14, wherein the mobility change at the relay terminal in the link associated with the first terminal comprises at least one of:
whether the relay terminal has experienced a cell reselection; or
whether the relay terminal has experienced an HO.

16. The method of any one of claims 1 to 15, further comprising:
receiving, by the first terminal, a link status from a second terminal, wherein the second terminal is a relay terminal, a source terminal, a target terminal, or a remote terminal.

17. The method of claim 16, wherein the link status is carried by at least one of: PC5 non-access stratum signaling, a discovery messages, a direct communication request (DCR) message, a direct communication accept (DCA) message, PC5 radio resource control (PC5-RRC) signaling, or media access control control element (MAC CE) signaling.

18. The method of claim 17, wherein the PC5-RRC signaling comprises at least one of: a measurement report, or a notification message.

19. The method of any one of claims 16 to 18, wherein the link status comprises at least one of:
a connection condition of a serving hop, which is a hop where the second terminal is currently connected to another terminal or network device; or
a connection condition of a candidate hop, which is a hop where the second terminal is potentially connected to another terminal or network device.

20. The method of claim 19, wherein the connection condition comprises at least one of: a relay terminal identifier, a measurement result, a hop level, or serving cell information.

21. The method of any one of claims 16 to 20, wherein the second terminal is the relay terminal, and the first terminal comprises at least one of: a source terminal and/or a target terminal with a normal link to the second terminal; a source terminal or a target terminal closer to the second terminal; a source terminal and/or a target terminal based on an implementation of the second terminal; or a source terminal triggering establishment of a connection between terminals.

22. The method of any one of claims 16 to 20, wherein
the second terminal is the relay terminal, and the first terminal is the remote terminal; or
when the second terminal is a relay terminal in a connected state, an end for receiving the link status further comprises a network device.

23. The method of any one of claims 1 to 22, wherein the first terminal selects the relay terminal based on at least one of:
a PC5 link quality between the first terminal and a candidate relay terminal;
meeting a high-layer criterion;
meeting an experienced hop level limit for relaying;
meeting a buffer capacity requirement of the relay terminal;
the relay terminal supporting a multi-hop;
a serving cell and/or a public land mobile network (PLMN) of the relay terminal meeting requirements; or
a link quality of a next hop or multiple hops of the relay terminal exceeding a configured threshold, wherein the configured thresholds for the multiple hops are the same or different.

24. A method for relay communication, comprising:
transmitting, by a second terminal, a link status, wherein the link status is related to a first trigger condition, the first trigger condition is used for triggering a first terminal to select a relay terminal that meets requirements of the first terminal, and the first terminal, the second terminal, and the relay terminal are located in a multi-hop relay link.

25. The method of claim 24, wherein transmitting, by the second terminal, the link status comprises:
transmitting, by the second terminal, the link status periodically.

26. The method of claim 24 or 25, wherein transmitting, by the second terminal, the link status comprises:
transmitting, by the second terminal, the link status based on a second trigger condition.

27. The method of claim 26, wherein the second trigger condition comprises at least one of the following events occurring:
a measurement result of a reference signal by the second terminal being greater than or equal to a configured threshold;
a difference between a current measurement result and a previous measurement result of the reference signal by the second terminal exceeding a configured threshold;
the second terminal having experienced a radio link failure (RLF);
a link associated with the second terminal being released;
a link associated with the second terminal having experienced a connection establishment failure;
a mobility change occurring in a relay terminal in a link associated with the second terminal;
the second terminal receiving a measurement or monitoring result from the relay terminal; or
the second terminal receiving a request from a terminal at a previous hop of the second terminal,
wherein the link associated with the second terminal comprises a direct link of the second terminal and/or one or more hops in the multi-hop relay link where the second terminal is located.

28. The method of any one of claims 24 to 27, wherein the link status is carried by at least one of: PC5 non-access stratum signaling, a discovery messages, a direct communication request (DCR) message, a direct communication accept (DCA) message, PC5 radio resource control (PC5-RRC) signaling, or media access control control element (MAC CE) signaling.

29. The method of claim 28, wherein the PC5-RRC signaling comprises at least one of: a measurement report, or a notification message.

30. The method of any one of claims 24 to 29, wherein the link status comprises at least one of:
a connection condition of a serving hop, which is a hop where the second terminal is currently connected to another terminal or network device; or
a connection condition of a candidate hop, which is a hop where the second terminal is potentially connected to another terminal or network device.

31. The method of claim 30, wherein the connection condition comprises at least one of: a relay terminal identifier, a measurement result, a hop level, or serving cell information.

32. The method of any one of claims 24 to 31, wherein the second terminal is a relay terminal, and the first terminal comprises at least one of: a source terminal and/or a target terminal with a normal link to the second terminal; a source terminal or a target terminal closer to the second terminal; a source terminal and/or a target terminal based on an implementation of the second terminal; or a source terminal triggering establishment of a connection between terminals.

33. The method of any one of claims 24 to 31, wherein
the second terminal is a relay terminal, and the first terminal is a remote terminal; or
when the second terminal is a relay terminal in a connected state, an end for receiving the link status further comprises a network device.

34. A first terminal, comprising:
a processing unit, configured to select a relay terminal that meets requirements of the first terminal based on a first trigger condition, wherein the first terminal and the relay terminal are located in a multi-hop relay link, and the first trigger condition is related to a link status.

35. The first terminal of claim 34, wherein the first trigger condition comprises at least one of the following relay selection trigger conditions:
an upper layer triggering at the first terminal;
a link quality of a direct link of the first terminal falling below a configured threshold;
a radio link failure occurring in a direct link of the first terminal;
a link quality between the first terminal and one or more candidate relay terminals exceeding a configured threshold; or
a difference between a link quality between the first terminal and one or more candidate relay terminals and a link quality of a direct link of the first terminal exceeding a configured threshold.

36. The first terminal of claim 35, wherein the link quality of the direct link of the first terminal falling below the configured threshold comprises at least one of:
a PC5 link quality between the first terminal and a directly connected terminal falling below a configured threshold; or
a Uu link quality between the first terminal and a directly connected network device falling below a configured threshold.

37. The first terminal of claim 36, wherein the configured thresholds for the PC5 link and/or the Uu link are configured via a radio resource control (RRC) configuration, a system information block (SIB) configuration, or a pre-configuration.

38. The first terminal of any one of claims 34 to 37, wherein the first trigger condition comprises at least one of the following relay reselection trigger conditions:
an upper layer triggering at the first terminal;
a link quality of one or more hops in the multi-hop relay link where the first terminal is located falling below a configured threshold;
a radio link failure occurring at one or more hops in the multi-hop relay link where the first terminal is located;
a link at one or more hops in the multi-hop relay link where the first terminal is located being released;
a cell reselection, a handover (HO), or an RRC connection establishment failure occurring in a relay terminal at one or more hops in the multi-hop relay link where the first terminal is located; or
indication information from a relay terminal at one or more hops in the multi-hop relay link where the first terminal is located.

39. The first terminal of claim 38, wherein the link quality of one or more hops in the multi-hop relay link where the first terminal is located falling below the configured threshold comprises at least one of:
a PC5 link quality of one or more hops in a link between the first terminal and a second terminal falling below a configured threshold;
a PC5 link quality of one or more hops in a link between the first terminal and a network device falling below a configured threshold; or
a Uu link quality between a relay terminal, at a first or last hop in a link between the first terminal and a network device, and the network falling below a configured threshold.

40. The first terminal of claim 39, wherein the configured thresholds for the PC5 link and/or the Uu link are configured by at least one of: an RRC configuration, an SIB configuration, a pre-configuration, a configuration from a relay, a configuration from a network to which the relay belongs, a configuration from a source terminal, or a configuration from a network to which the source terminal belongs.

41. The first terminal of any one of claims 38 to 40, wherein the thresholds for different hops in the multi-hop relay link where the first terminal is located are configured to be the same or different.

42. The first terminal of any one of claims 38 to 41, wherein the indication information indicates at least one of: a link failure, a link release, or a link quality below a configured threshold occurring at the hop where the relay terminal is located, or a cell reselection, an HO, or an RRC connection establishment failure occurring at the relay terminal.

43. The first terminal of any one of claims 34 to 42, wherein the first terminal is a remote terminal, a source terminal, a target terminal, or a relay terminal in the multi-hop relay link.

44. The first terminal of any one of claims 34 to 43, wherein
the processing unit is further configured to monitor a link status of a link associated with the first terminal,
the link associated with the first terminal comprises a direct link of the first terminal and/or one or more hops in the multi-hop relay link where the first terminal is located.

45. The first terminal of claim 44, wherein the link status of the link associated with the first terminal comprises at least one of:
a link quality of the link associated with the first terminal;
a link availability of the link associated with the first terminal; or
a mobility change at a relay terminal in the link associated with the first terminal.

46. The first terminal of claim 45, wherein the link quality of the link associated with the first terminal comprises at least one of:
whether a PC5 link quality of the link associated with the first terminal falls below a configured threshold; or
whether a Uu link quality of the link associated with the first terminal falls below a configured threshold.

47. The first terminal of claim 45 or 46, wherein the link availability of the link associated with the first terminal comprises at least one of:
whether the link associated with the first terminal has experienced a radio link failure (RLF);
whether the link associated with the first terminal has been released; or
whether the link associated with the first terminal has been successfully established.

48. The first terminal of any one of claims 45 to 47, wherein the mobility change at the relay terminal in the link associated with the first terminal comprises at least one of:
whether the relay terminal has experienced a cell reselection; or
whether the relay terminal has experienced an HO.

49. The first terminal of any one of claims 34 to 48, further comprising:
a reception unit, configured to receive a link status from a second terminal, wherein the second terminal is a relay terminal, a source terminal, a target terminal, or a remote terminal.

50. The first terminal of claim 49, wherein the link status is carried by at least one of: PC5 non-access stratum signaling, a discovery messages, a direct communication request (DCR) message, a direct communication accept (DCA) message, PC5 radio resource control (PC5-RRC) signaling, or media access control control element (MAC CE) signaling.

51. The first terminal of claim 50, wherein the PC5-RRC signaling comprises at least one of: a measurement report, or a notification message.

52. The first terminal of any one of claims 49 to 51, wherein the link status comprises at least one of:
a connection condition of a serving hop, which is a hop where the second terminal is currently connected to another terminal or network device; or
a connection condition of a candidate hop, which is a hop where the second terminal is potentially connected to another terminal or network device.

53. The first terminal of claim 52, wherein the connection condition comprises at least one of: a relay terminal identifier, a measurement result, a hop level, or serving cell information.

54. The first terminal of any one of claims 49 to 53, wherein the second terminal is the relay terminal, and the first terminal comprises at least one of: a source terminal and/or a target terminal with a normal link to the second terminal; a source terminal or a target terminal closer to the second terminal; a source terminal and/or a target terminal based on an implementation of the second terminal; or a source terminal triggering establishment of a connection between terminals.

55. The first terminal of any one of claims 49 to 53, wherein
the second terminal is the relay terminal, and the first terminal is the remote terminal; or
when the second terminal is a relay terminal in a connected state, an end for receiving the link status further comprises a network device.

56. The first terminal of any one of claims 34 to 55, wherein the first terminal selects the relay terminal based on at least one of:
a PC5 link quality between the first terminal and a candidate relay terminal;
meeting a high-layer criterion;
meeting an experienced hop level limit for relaying;
meeting a buffer capacity requirement of the relay terminal;
the relay terminal supporting a multi-hop;
a serving cell and/or a public land mobile network (PLMN) of the relay terminal meeting requirements; or
a link quality of a next hop or multiple hops of the relay terminal exceeding a configured threshold, wherein the configured thresholds for the multiple hops are the same or different.

57. A second terminal, comprising:
a transmission unit, configured to transmit a link status, wherein the link status is related to a first trigger condition, the first trigger condition is used for triggering a first terminal to select a relay terminal that meets requirements of the first terminal, and the first terminal, the second terminal, and the relay terminal are located in a multi-hop relay link.

58. The second terminal of claim 57, wherein the transmission unit is further configured to transmit the link status periodically.

59. The second terminal of claim 57 or 58, wherein the transmission unit is further configured to transmit the link status based on a second trigger condition.

60. The second terminal of claim 59, wherein the second trigger condition comprises at least one of the following events occurring:
a measurement result of a reference signal by the second terminal being greater than or equal to a configured threshold;
a difference between a current measurement result and a previous measurement result of the reference signal by the second terminal exceeding a configured threshold;
the second terminal having experienced a radio link failure (RLF);
a link associated with the second terminal being released;
a link associated with the second terminal having experienced a connection establishment failure;
a mobility change occurring in a relay terminal in a link associated with the second terminal;
the second terminal receiving a measurement or monitoring result from the relay terminal; or
the second terminal receiving a request from a terminal at a previous hop of the second terminal,
wherein the link associated with the second terminal comprises a direct link of the second terminal and/or one or more hops in the multi-hop relay link where the second terminal is located.

61. The second terminal of any one of claims 57 to 60, wherein the link status is carried by at least one of: PC5 non-access stratum signaling, a discovery messages, a direct communication request (DCR) message, a direct communication accept (DCA) message, PC5 radio resource control (PC5-RRC) signaling, or media access control control element (MAC CE) signaling.

62. The second terminal of claim 61, wherein the PC5-RRC signaling comprises at least one of: a measurement report, or a notification message.

63. The second terminal of any one of claims 57 to 62, wherein the link status comprises at least one of:
a connection condition of a serving hop, which is a hop where the second terminal is currently connected to another terminal or network device; or
a connection condition of a candidate hop, which is a hop where the second terminal is potentially connected to another terminal or network device.

64. The second terminal of claim 63, wherein the connection condition comprises at least one of: a relay terminal identifier, a measurement result, a hop level, or serving cell information.

65. The second terminal of any one of claims 57 to 64, wherein the second terminal is a relay terminal, and the first terminal comprises at least one of: a source terminal and/or a target terminal with a normal link to the second terminal; a source terminal or a target terminal closer to the second terminal; a source terminal and/or a target terminal based on an implementation of the second terminal; or a source terminal triggering establishment of a connection between terminals.

66. The second terminal of any one of claims 57 to 64, wherein
the second terminal is a relay terminal, and the first terminal is a remote terminal; or
when the second terminal is a relay terminal in a connected state, an end for receiving the link status further comprises a network device.

67. A terminal device, comprising a processor and a memory, wherein the memory is configured to store a computer program, and the processor is configured to invoke the computer program stored in the memory and execute the computer program to enable the terminal device to execute the method of any one of claims 1 to 23, or the method of any one of claims 24 to 33.

68. A chip, comprising a processor configured to invoke a computer program from a memory and execute the computer program to enable a device equipped with the chip to execute the method of any one of claims 1 to 23, or the method of any one of claims 24 to 33.

69. A computer-readable storage medium for storing a computer program that, when executed by a device, enables the device to execute the method of any one of claims 1 to 23, or the method of any one of claims 24 to 33.

70. A computer program product comprising computer program instructions that enable a computer to execute the method of any one of claims 1 to 23, or the method of any one of claims 24 to 33.

71. A computer program, wherein the computer program enables a computer to execute the method of any one of claims 1 to 23, or the method of any one of claims 24 to 33.
